# EUROPEAN PATENT SPECIFICATION

(11) **EP 1 294 984 B1**
(45) Date of publication and mention of the grant of the patent: **24.03.2004**
(21) Application number: 01944788.7
(22) Date of filing: 01.06.2001
(51) Int. Cl.: D21H 23/72, D21H 19/82, B05D 1/40, D21H 25/12, B05C 11/02

(54) **FORMATION OF ORIENTED MULTILAYER POLYMERIC FILMS**
HERSTELLUNG VON ORIENTIERTEN MEHRSCHICHTIGEN POLYMERFILMEN
FORMATION DE FILMS DE POLYMERE MULTICOUCHES ORIENTES

(30) Priority: 12.06.2000 CA 2311037
(43) Date of publication of application: 26.03.2003
(73) Proprietor: Simex Technologies Inc, Saint-Laurent, Québec H4S 1E7 (CA)
(72) Inventor: CHTOUROU, Halim, Granby, Québec J2G 8X8 (CA)
(74) Representative: Casalonga, Axel
(86) International application number: PCT/CA2001/000815
(87) International publication number: WO 2001/096661

(56) References cited:
- WO-A-98/20202
- DE-A- 3 710 059
- US-A- 3 690 910
- US-A- 4 267 215

## Description

### TECHNICAL FIELD

The present invention pertains to improvements in the field of oriented multilayer polymeric films. More particularly, the invention relates to a substrate coated with an oriented multilayer polymeric film having improved flexibility and improved gas barrier properties, as well as to a method of forming such a film on a substrate and to the use of a particle orienting roller for orienting polymer particles present in a polymer dispersion coated on a substrate.

### BACKGROUND ART

When considering gas barrier properties of an extruded polymeric film coated on a substrate, it is already known in the art that the diffusion coefficient of any penetrating gas such as oxygen, carbon dioxide or water vapor through the polymer film decreases by increasing the crystallinity of the film. This can be achieved by a chemical approach (molecular design) and appropriate cooling rate (chilling in the coating process).

In the case of a substrate coated with an oriented multilayer polymeric film formed from a water-based polymer dispersion and wherein the polymer particles of each layer are oriented in the same direction, it is also known that a three-layer film provides a stronger barrier to gas than a two-layer film having the same weight, which in turn is much more efficient than a one-layer film also having the same weight. Water-based polymer dispersions comprise very small polymer particles having an average size ranging from 150 to 200 nm and containing macro-molecules. When coated on a substrate and properly dried to remove the water, a continuous film is formed.

Whereas scientists are still studying and modeling oriented multilayer polymeric films formed from water-based polymer dispersions, they all agree that these films have a weak flexibility compared to that of extruded polymeric films. This weak flexibility renders waterborne barrier coatings in the packaging industry less attractive. The film flexibility is weak mainly when the film is folded about a fold line parallel to the direction of orientation of the polymer particles in each layer of the multilayer film, causing the film to break at the fold line. This of course impairs the gas barrier properties of the film.

### DISCLOSURE OF THE INVENTION

It is therefore an object of the present invention to overcome the above drawbacks and to provide a substrate coated with an oriented multilayer polymeric film which is formed from a polymer dispersion and which has improved flexibility as well as improved gas barrier properties.

It is another object of the invention to provide a method of forming the above film on a substrate.

According to one aspect of the present invention, there is thus provided a substrate coated with an oriented multilayer polymeric film, wherein the film comprises at least two layers of polymer particles oriented along two different directions with respect to one another.

Applicant has found quite unexpectedly that the presence of at least two layers of polymer particles oriented along two different directions with respect to one another in a multilayer polymeric film improves the flexibility of such a film as well as the gas barrier properties thereof.

The present invention also provides, in another aspect thereof, a method of forming the above oriented multilayer polymeric film on a substrate. The method according to the invention comprises the steps of:
a) conveying a substrate along a predetermined path at a predetermined travelling speed and in a predetermined travelling direction;
b) coating the substrate with a polymer dispersion containing polymer particles and a liquid dispersing medium to form on the substrate a first coating of the dispersion;
c) contacting the first coating with a first particle orienting roller driven for rotation about a first longitudinal axis thereof independently of the substrate so as to have a first tangential speed at a surface of the coated substrate, the first particle orienting roller having a first particle orienting pattern arranged at a first angle relative to the travelling direction of the substrate to cause orientation of the polymer particles of the first coating along a first predetermined direction;
d) drying the first coating to cause evaporation of the liquid dispersing medium and formation of a first layer of oriented polymer particles on the substrate; and
e) successively forming on the first layer at least one further layer of oriented polymer particles, each further layer being formed by:
   i) coating a previously formed underlying layer of oriented polymer particles with the polymer dispersion to form on the underlying layer a further coating of the dispersion;
   ii) contacting the further coating with a further particle orienting roller driven for rotation about a further longitudinal axis thereof independently of the substrate so as to have a further tangential speed at the surface of the coated substrate, the further particle orienting roller having a further particle orienting pattern arranged at a further angle relative to the travelling direction of the substrate to cause orientation of the polymer particles of the further coating along a further predetermined direction; and
   iii) drying the further coating to cause evaporation of the liquid dispersing medium and formation of the further layer of oriented polymer particles on the underlying layer;
wherein at least one further angle is different from the first angle or at least one further tangential speed is different from the first tangential speed, thereby forming on the substrate an oriented multilayer polymeric film having at least two layers of polymer particles oriented along two different directions with respect to one another.

The polymer particles are preferably particles of a waterborne polymer. Examples of suitable waterborne polymers which may be used include polyvinylidene chloride, polyvinyl acetate, polyvinyl alcohol and styrene-butadiene copolymers. The liquid dispersing medium can comprise, for example, water, an alcohol or a mixture thereof.

According to a preferred embodiment of the invention, the first particle orienting roller comprises a first cylindrical member rotatable about the aforesaid first longitudinal axis and a first continuous helical land on the first cylindrical member over at least a portion of the length thereof, the first helical land forming a first continuous helical particle orienting groove along the first cylindrical member. The first land and the first groove define the aforesaid first particle orienting pattern. The first helical land may be defined by a single wire helically and tightly wound about a major portion of the length of the first cylindrical member.

According to another preferred embodiment of the invention, two further layers of oriented polymer particles are formed in step (e) by:
i) coating the first layer of oriented polymer particles with the polymer dispersion to form on the first layer a second coating of the dispersion;
ii) contacting the second coating with a second particle orienting roller driven for rotation about a second longitudinal axis thereof independently of the substrate so as to have a second tangential speed at the surface of the coated substrate, the second particle orienting roller having a second particle orienting pattern arranged at a second angle relative to the travelling direction of the substrate to cause orientation of the polymer particles of the second coating along a second predetermined direction;
iii) drying the second coating to cause evaporation of the liquid dispersing medium and formation of a second layer of oriented polymer particles on the first layer;
iv) coating the second layer of oriented polymer particles with the polymer dispersion to form on the second layer a third coating of the dispersion;
v) contacting the third coating with a third particle orienting roller driven for rotation about a third longitudinal axis thereof independently of the substrate so as to have a third tangential speed at the surface of the coated substrate, the third particle orienting roller having a third particle orienting pattern arranged at a third angle relative to the travelling direction of the substrate to cause orientation of the polymer particles of the third coating along a third predetermined direction; and
vi) drying the third coating to cause evaporation of the liquid dispersing medium and formation of a third layer of oriented polymer particles on the second layer.

The second angle is different from the aforementioned first angle or the second tangential speed is different from the aforementioned first tangential speed, whereby the second predetermined direction is different from the aforementioned first predetermined direction. The third angle is different from the second angle or the third tangential speed is different from the second tangential speed, whereby the third predetermined direction is different from the second predetermined direction.

Preferably, the second particle orienting roller comprises a second cylindrical member rotatable about the aforesaid second longitudinal axis and a first plurality of juxtaposed continuous helical lands on the second cylindrical member over at least a portion of the length thereof, the helical lands of the first plurality having a similar pitch and forming a first series of helical particle orienting grooves along the second cylindrical member, the lands of the first plurality and the grooves of the first series defining the second particle orienting pattern. The third particle orienting roller, on the other hand, comprises a third cylindrical member rotatable about the aforesaid third longitudinal axis and a second plurality of juxtaposed continuous helical lands on the third cylindrical member over at least a portion of the length thereof, the helical lands of the second plurality having a similar pitch and forming a second series of helical particle orienting grooves along the third cylindrical member, the lands of the second plurality and the grooves of the second series defining the third particle orienting pattern.

The use of the aforementioned particle orienting roller provided with a series of helical particle orienting grooves is novel and constitutes a further aspect of the invention.

The present invention therefore provides, in a further aspect thereof, the use of a particle orienting roller for orienting polymer particles present in a polymer dispersion coated on a substrate. The particle orienting roller according to the invention comprises a cylindrical member rotatable about a longitudinal axis thereof and a plurality of juxtaposed continuous helical lands on the cylindrical member over at least a portion of the length thereof. The helical lands have a similar pitch and form a series of helical particle orienting grooves along the cylindrical member for imparting a predetermined orientation to the polymer particles when the cylindrical member is rotated while being in contact with the polymer dispersion.

According to a preferred embodiment, the helical lands are defined by a plurality of juxtaposed wires helically wound about the cylindrical member, the helical particle orienting grooves being each defined between adjacent wires.

According to another preferred embodiment, the helical lands are defined by a plurality of helical ribs integrally formed on a peripheral surface of the cylindrical member, the helical particle orienting grooves being each defined between adjacent ribs.

According to a further preferred embodiment, the helical particle orienting grooves are integrally defined in a peripheral surface of the cylindrical member.

A particularly preferred oriented multilayer polymeric film formed on a substrate in accordance with the invention is an oriented three-layer polymeric film having a first layer comprising polymer particles oriented along a first direction, a second layer disposed on the first layer and comprising polymer particles oriented along a second direction angled at about 45° relative to the first direction, and a third layer disposed on the second layer and comprising polymer particles oriented along a third direction parallel to the first direction.

As previously noted, the oriented multilayer polymeric film formed on a substrate in accordance with the present invention has improved flexibility and improved gas barrier properties.

### BRIEF DESCRIPTION OF DRAWINGS

Further features and advantages of the invention will become more readily apparent from the following description of preferred embodiments as illustrated by way of examples in the accompanying drawings, in which:
Figure 1 is a schematic view of an apparatus for carrying out a method of forming an oriented two-layer polymeric film on a substrate, according to a preferred embodiment of the invention;
Figure 2 is a partial schematic bottom plan view of the apparatus shown in Fig. 1, illustrating the orientation of the polymer particles in the successive coatings applied onto the substrate;
Figure 3 is a schematic view of an apparatus for carrying out a method of forming an oriented three-layer polymer film on a substrate, according to another preferred embodiment of the invention;
Figure 4 is a partial schematic bottom plan view of the apparatus shown in fig. 3, illustrating the orientation of the polymer particles in the successive coatings applied onto the substrate;
Figure 5 is a partial side view of a conventional particle orienting roller which is used in the apparatuses shown in Figs. 1 and 3;
Figure 6 is a partial side view of another conventional particle orienting roller which may also be used in the apparatus shown in Fig. 1 or 3;
Figure 7 is a part-sectional side view of a particle orienting roller according to a preferred embodiment of the invention, which is used in the apparatuses shown in Figs. 1 and 3;
Figure 8 is a side view of a particle orienting roller according to another preferred embodiment of the invention, which may also be used in the apparatus shown in Fig. 1 or 3;
Figure 9 is a side view of a particle orienting roller according to a further preferred embodiment of the invention, which may also be used in the apparatus shown in Fig. 1 or 3;
Figure 10 is a schematic top plan view illustrating how conventional particle orienting rollers may disposed in the travelling path of the substrate to form thereon an oriented three-layer polymeric film, according to a preferred embodiment of the invention; and
Figure 11 is a view similar to Fig. 11, illustrating how the travelling direction of the substrate may be varied relative to the rotation axis of one of the conventional particle orienting rollers to form on the substrate an oriented three-layer polymeric film, according to another preferred embodiment of the invention.

### MODES FOR CARRYING OUT THE INVENTION

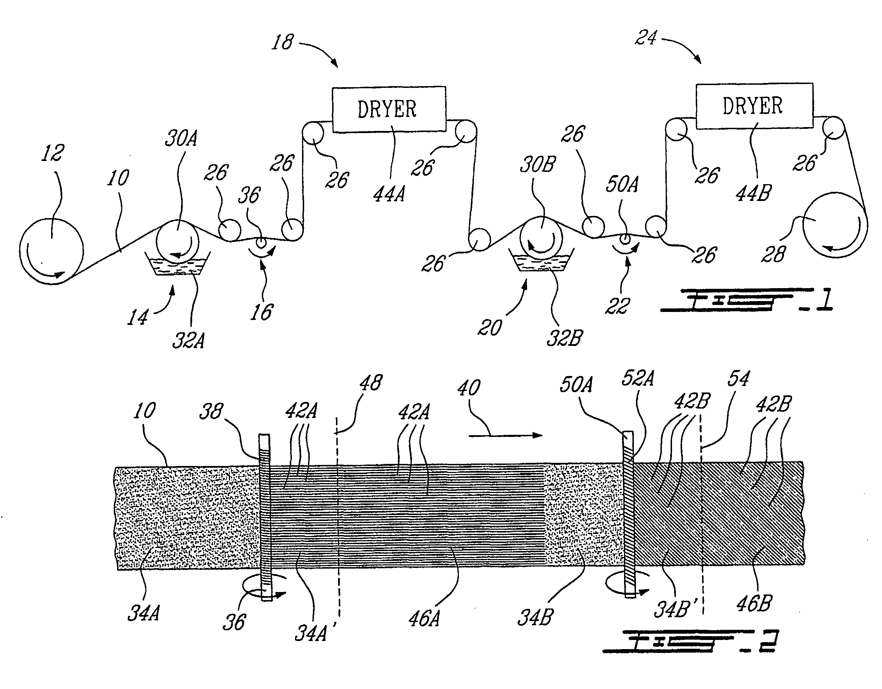

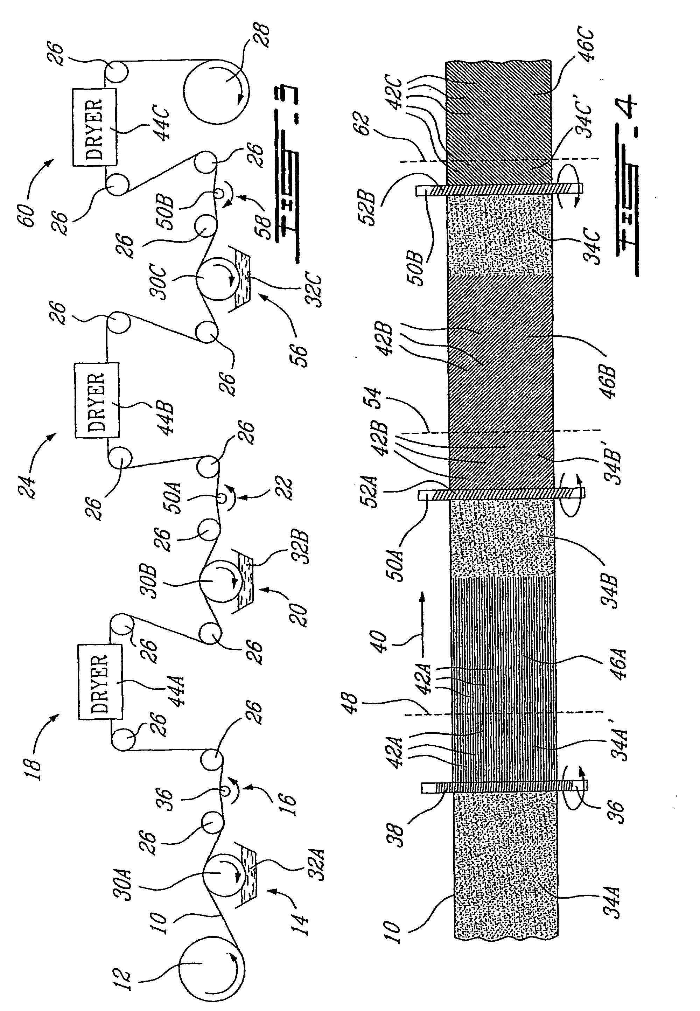

Referring first to Figs. 1 and 2, a continuous web 10 of paper is conveyed from a paper roll 12 through a first coating station 14, a first particle orienting station 16, a first drying station 18, a second coating station 20, a second particle orienting station 22 and a second drying station 24, by guide rollers 26 and a take-up driving roller 28. At the coating station 14, a first coating roller 30A partially immersed in a first bath 32A of polymer dispersion containing polymer particles and water is used for coating the paper web 10 with the polymer dispersion so as to form on the paper web 10 a first coating 34A of polymer dispersion. At the particle orienting station 16, the first coating 34A is contacted with a first particle orienting roller 36 which is driven for counterclockwise rotation about its longitudinal axis independently of the paper web 10 so as to have a tangential speed at the surface of the coated paper web 10. The particle orienting roller 36 is driven by a suitable drive mechanism (not shown). It has a particle orienting pattern 38 arranged at an angle relative to the travelling direction 40 of the paper web 10 to cause orientation of the polymer particles of the first coating 34A along a first predetermined direction. In the embodiment illustrated, the polymer particles 42A of the first coating 34A' downstream of the roller 36 are oriented in a direction parallel to the travelling direction 40 of the paper web 10; in other words, they are oriented at an angle of 0°. The paper web 10 provided with the coating 34A' of oriented polymer particles 42A is then passed through a first dryer 44A to cause evaporation of the water present in the coating 34A' and formation of a first layer 46A of oriented polymer particles 42A on the paper web 10. In Fig. 2, the broken line 48 represents the start of the first drying step.

At the second coating station 20, a second coating roller 30B partially immersed in a second bath 32B of the polymer dispersion is used for coating the first layer 46A with the polymer dispersion so as to form on the layer 46A a second coating 34B of polymer dispersion. At the second particle orienting station 22, the second coating 34B is contacted with a second particle orienting roller 50A which is driven for counterclockwise rotation about its longitudinal axis independently of the paper web 10 so as to have a tangential speed at the surface of the coated paper web 10. The particle orienting roller 50A is driven by a suitable drive mechanism (not shown). The tangential speed of the particle orienting roller 50A is the same as the tangential speed of the particle orienting roller 36. The roller 50A has a particle orienting pattern 52A arranged at angle relative to the travelling direction 40 of the paper web 10 to cause orientation of the of the polymer particles of the second coating 34B along a second predetermined direction. In the embodiment illustrated, the polymer particles 42B of the second coating 34B' downstream of the roller 50A are oriented in a direction angled at about 45° relative to the travelling direction 40 of the paper web 10. The paper web 10 provided with the layer 46A of oriented polymer particles 42A, on which is disposed the coating 34B' of oriented polymer particle 42B' of oriented polymer particles 42B, is then passed through a second dryer 44B to cause evaporation of the water present in the coating 34B' and formation of a second layer 46B of oriented polymer particles 42B on the first layer 46A of oriented polymer particles 42A. In Fig. 2, the broken line 54 represents the start of the second drying step.

Thus, the apparatus shown in Fig. 1 enables one to form on the paper web 10 an oriented two-layer polymeric film having a first layer 46A comprising polymer particles 42A oriented along a predetermined direction (i.e. 0°), and a second layer 46B disposed on the first layer 46A and comprising polymer particles 42B oriented along a direction angled at about 45° relative to the direction of orientation of the polymer particles 42A.

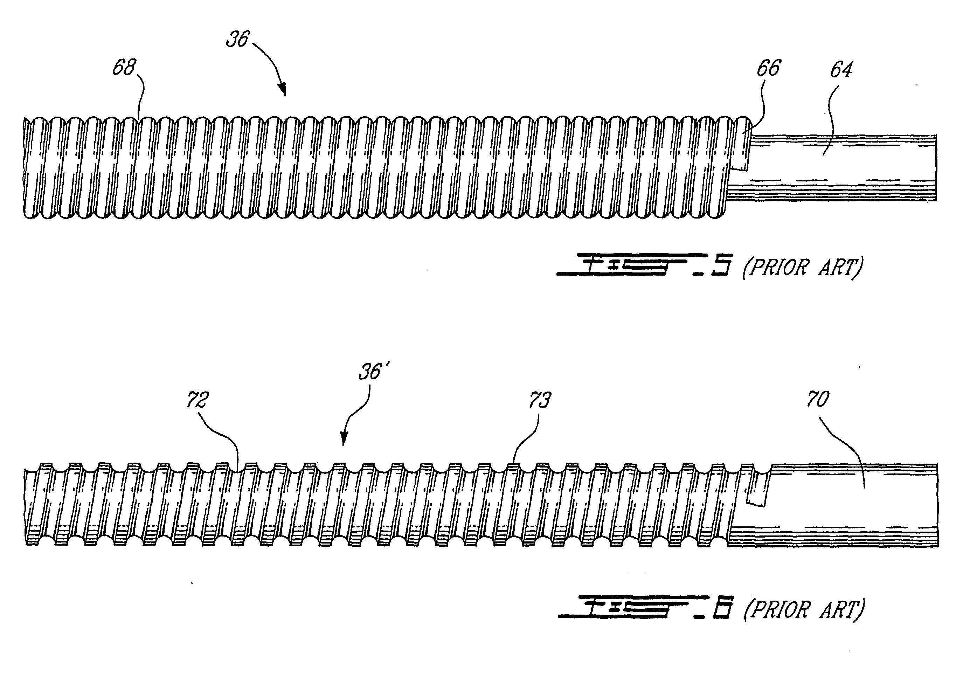

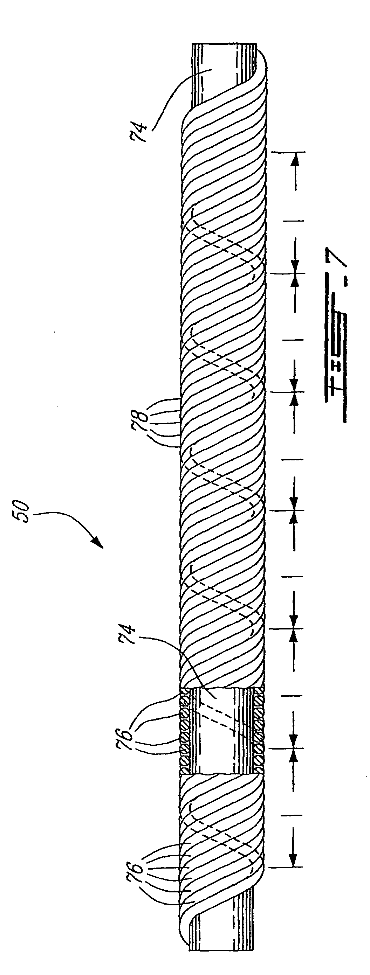

The apparatus illustrated in Fig. 3 is similar to the one illustrated in Fig. 1, with the exception that a third coating station 56, a third particle orienting station 58 and a third drying station 60 have been added in order to form on the second layer 46B of oriented polymer particles 42B a third layer of oriented polymer particles. As shown in Figs. 3 and 4, at the coating station 56, a third coating roller 30C partially immersed in a third bath 32C of the polymer dispersion is used for coating the second layer 46B with the polymer dispersion so as to form on the layer 46B a third coating 34C of polymer dispersion. At the particle orienting station 58, the third coating 34C is contacted with a third particle orienting roller 50B which is driven for clockwise rotation about its longitudinal axis independently of the paper web 10 so as to have a tangential speed at the surface of the coated paper web 10. The particle orienting roller 50B is driven by a suitable drive mechanism (not shown). It has a particle orienting pattern 52B which is the same as the particle orienting pattern 52A of the particle orienting roller 50A. Since the roller 50B has a negative tangential speed as opposed to the positive tangential speed of the roller 50A, the particle orienting pattern 52B of the roller 50B imparts to the polymer particles of the third coating 34C an orientation along a direction which is the mirror image of the direction of orientation of the polymer particles 42B of the second layer 46B. Thus, in the embodiment illustrated, the polymer particles 42C of the third coating 34C' downstream of the roller 50B are oriented in a direction angled at about 45° relative to the travelling direction 40 of the paper web 10, but at 90° relative to the direction of orientation of the polymer particles 42B of the second layer 46B. The paper web 10 provided with the layer 46A of oriented polymer particles 42A and the layer 46B of oriented polymer particles 42B, on which is disposed the coating 34C' of oriented polymer particles 42C, is then passed through a third dryer 44C to cause evaporation of the water present in the coating 34C' and formation of a third layer 46C of oriented polymer particles 42C on the second layer 46B of oriented polymer particles 42B. In Fig. 4, the broken line 62 represents the start of the third drying step.

It is of course possible to replace the particle orienting roller 50B by the particle orienting roller 36 driven for counterclockwise rotation about its longitudinal axis. In this case, the direction of orientation of the polymer particles 42C of the third layer 46C would be the same as the direction of orientation of the polymer particles 42A of the first layer 46A. In other words, the polymer particles 42C of the third layer 46C would be oriented in a direction parallel to the travelling direction 40 of the paper web 10 (i.e. at 0°).

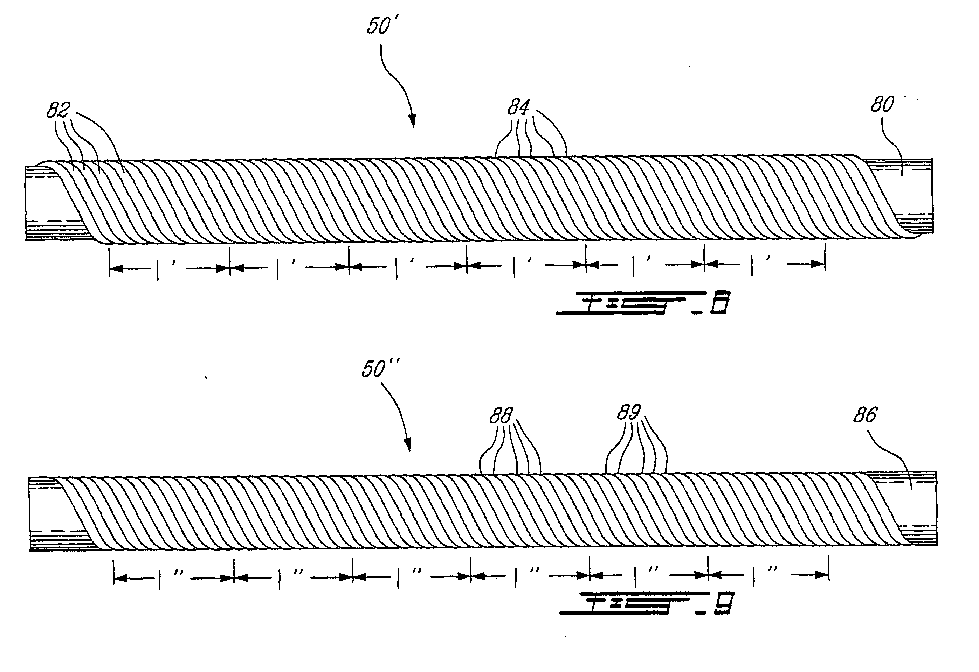

The particle orienting roller 36 used in the apparatuses shown in Figs. 1 and 3 is a conventional particle orienting roller which is illustrated in more detail in Fig. 5. As shown in Fig. 5, the roller 36 comprises a cylindrical member 64 and a single wire 66 helically and tightly wound about the cylindrical member 64 over a major portion of the length thereof. The single wire 66 forms a continuous helical groove 68 adapted to impart to the polymer particles an orientation in a direction at 90° relative to the longitudinal axis of the cylindrical member 64. The single wire 66 defines a continuous helical land or ridge on the circumference of the cylindrical member 64. Thus, the pitch of the particle orienting roller 36 is equal to a lead thereof, the lead being the distance a helical land or ridge advances axially in one turn of the particle orienting roller 36. The land defined by the single wire 66 together with the groove 68 define the aforesaid particle orienting pattern 38.

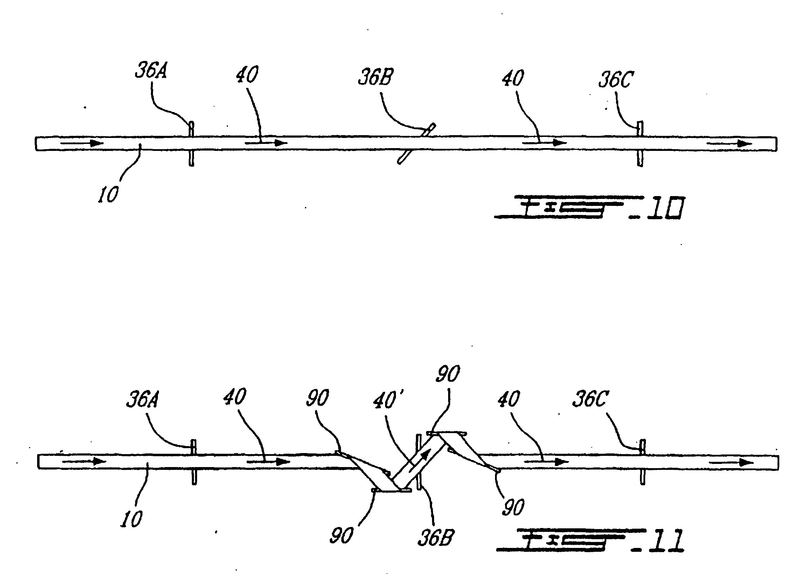

Instead of using the particle orienting roller 36, it is possible to use the roller 36' illustrated in Fig. 6. As shown, the particle orienting roller 36' comprises a cylindrical member 70 provided with a single helical groove 72 which is integrally defined in the peripheral surface of the cylindrical member 70 and extends along a major portion of the length thereof. The helical groove 72 is adapted to impart to the polymer particles an orientation in a direction at 90° relative to the longitudinal axis of the cylindrical member 70. In this single helical groove 72, the lead is equal to the pitch of the particle orienting roller 36'. The groove 72 may be formed by machining. As a result of the machining of such a groove, a single continuous helical land 73 is formed.

Each of the particle orienting rollers 50A and 50B is a particle orienting roller 50 according to a preferred embodiment of the invention, which is illustrated in Fig. 7. As shown, the roller 50 comprises a cylindrical member 74 and a plurality of juxtaposed continuous helical lands defined by a plurality of juxtaposed wires 76 helically wound about the cylindrical member 74 over a major portion of the length thereof. The wires 76 are wound so as to have the same pitch. A helical particle orienting groove 78 is defined between each pair of adjacent wires 76. The lands defined by the wires 76 together with the grooves 78 define the aforesaid particle orienting pattern 52A,52B. As opposed to the particle orienting rollers 36 and 36' shown in Figs. 5 and 6, respectively, the lead ℓ of the particle orienting roller 50 is not equal to the pitch thereof, but rather to "n" times the pitch thereof, "n" being the number of wires 76 helically wound about the cylindrical member 74. This enables the particle orienting grooves 78 to orient the polymer particles along a direction which is angled at about 5° to about 85° relative to the travelling direction 40 of the paper web 10, depending for instance on the pitch and the tangential speed of the roller 50.

The pitch of the particle orienting roller 50 has a direct influence on the angle of the particle orienting pattern thereof. Therefore, by changing the pitch of the roller 50, it becomes possible to change the direction of orientation of the polymer particles. Alternatively, this can be done by changing the relative orientation of the roller 50 with respect to the travelling direction 40 of the web 10. Further directional changes can be imparted to the polymer particles by varying the tangential speed of the particle orienting roller 50. The tangential speed can be varied by changing the angular speed of the roller or its diameter. The tangential speed can also be varied by changing the direction of rotation of the roller 50. As previously noted, a change in the direction of rotation of the roller 50 from a counterclockwise to a clockwise rotation may be seen as a change from a positive to a negative tangential speed.

Instead of using the particle orienting roller 50, it is also possible to use the rollers 50' and 50" illustrated in Figs. 8 and 9, respectively. As shown in Fig. 8, the particle orienting roller 50' comprises a cylindrical member 80 and a plurality of juxtaposed continuous helical lands defined by a plurality of helical ribs 82 integrally formed on the peripheral surface of the cylindrical member 80 over a major portion of the length thereof. A helical particle orienting groove 84 is defined between each pair of adjacent ribs 82. The helical grooves 84 are adapted to orient the polymer particles along a direction which is angled at about 5° to about 85° relative to the travelling direction 40 of the paper web 10, depending for instance on the pitch and the tangential speed of the roller 50'. The particle orienting roller 50" illustrated in Fig. 9 comprises a cylindrical member 86 provided with a plurality of helical particle orienting grooves 88 which are integrally defined in the peripheral surface of the cylindrical member 86 and extend along a major portion of the length thereof. The helical grooves 88 are also adapted to orient the polymer particles along a direction which is angled at about 5° to about 85° relative to the travelling direction 40 of the paper web 10, depending for instance on the pitch and the tangential speed of the roller 50". The grooves 88 may be formed by machining. As a result of the machining of such grooves, a plurality of juxtaposed continuous helical lands 89 are formed. In the embodiments illustrated in Figs. 8 and 9, the particle orienting grooves 84 and 88 are similar to the particle orienting grooves 78 of the roller 50 shown in Fig. 7. The lead ℓ' of the roller 50' and the lead ℓ" of the roller 50" are also the same as the lead ℓ of the roller 50.

In the embodiments illustrated in Figs. 1-4, the rotation axes of the rollers 36, 50A and 50B are all at right angle relative to the travelling direction 40 of the paper web 10. It is possible to achieve the same results without using the particle orienting rollers 50A and 50B, by replacing these rollers with the particle orienting rollers 36 and inclining one of the rollers 36 relative to the travelling direction 40 of the paper web 10. This is schematically illustrated in Fig. 10. As shown, three particle orienting rollers 36A, 36B and 36C are used, the rollers 36A and 36C being disposed so that their rotation axis extends at right angle relative to the travelling direction 40 of the paper web 10. The roller 36B, however, is disposed so that its rotation axis extends at a tilt angle of about 45° relative to the travelling direction 40 of the paper web 10. As a result of such an inclination, the particle orienting groove 68 (shown in Fig. 5) of the roller 36B imparts to the polymer particles an orientation which is angled at about 45° relative to the travelling direction 40 of the paper web 10. Thus, the oriented three-layer film formed as a result of the disposition of the rollers 36A, 36B and 36C comprises a first layer of polymer particles oriented along a direction parallel to the travelling direction 40 of the paper web, a second layer of polymer particles oriented along a direction angled at about 45° relative to the direction 40, and a third layer of polymer particles oriented along a direction parallel to the direction 40. Although the particle orienting roller 36B is shown in Fig. 10 as being inclined at about 45° relative to the travelling direction 40 of the paper web 10, it is possible to dispose the roller 36B so that its rotation axis extends at a tilt angle ranging from about 5° to about 85° relative to the direction 40.

The same result as that obtained with the embodiment shown in Fig. 10 can also be achieved by disposing the particle orienting roller 36B so that its rotation axis is parallel to the rotation axis of the particle orienting roller 36A and by varying the travelling direction of the paper web 10, prior to the second coating of polymer dispersion being contacted by the roller 36B, so that it is angled at the aforesaid tilt angle relative to the rotation axis of the roller 36B. This is schematically illustrated in Fig. 11. As shown, by using appropriate guide rollers 90, one may vary the travelling direction of the paper web 10 upstream of the roller 36B so that the travelling direction 40' is angled at about 45° relative to the rotation axis of the roller 36B.

The following non-limiting example further illustrates the invention.

### EXAMPLE

An oriented three-layer polymeric film A was formed on a paperboard, by the method described above. The film A comprised a first layer of polymer particles oriented along a direction parallel to the travelling direction of the paperboard (i.e. 0°), a second layer of polymer particles oriented along a direction angled at 45° relative to the travelling direction of the paperboard (i.e. 45°), and a third layer of polymer particles oriented along a direction parallel to the travelling direction of the paperboard (i.e. 0°). The moisture vapor transmission rate (MVTR) of such a film was measured at 37.8°C and 100% relative humidity and compared with the MVTR of an oriented three-layer polymeric, film B formed on the same type of paperboard by replacing the particle orienting rollers 50A and 50B in the apparatus of Fig. 3 with the particle orienting rollers 36 shown in Fig. 5. The film B comprised three layers of polymers particles all oriented along a direction parallel to the travelling direction of the paperboard (i.e. 0°, 0°, 0°). The results are as follows:

| Film A (0°, 45°, 0°) | | Film B (0°, 0°, 0°) | |
|---|---|---|---|
| Film Weight (g/m²) | MVTR (g/m²/day) | Film Weight (g/m²) | MVTR (g/m²/day) |
| 17 | 2 | 17 | 4 |

As it is apparent, the film A has better moisture vapor barrier properties than the film B.

## Claims

1. A method of forming an oriented multilayer polymeric film on a substrate, comprising the steps of:
a) conveying a substrate along a predetermined path at a predetermined travelling speed and in a predetermined travelling direction;
b) coating the substrate with a polymer dispersion containing polymer particles and a liquid dispersing medium to form on said substrate a first coating of said dispersion;
c) contacting said first coating with a first particle orienting roller driven for rotation about a first longitudinal axis thereof independently of said substrate so as to have a first tangential speed at a surface of the coated substrate, said first particle orienting roller having a first particle orienting pattern arranged at a first angle relative to the travelling direction of said substrate to cause orientation of the polymer particles of said first coating along a first predetermined direction;
d) drying said first coating to cause evaporation of said liquid dispersing medium and formation of a first layer of oriented polymer particles on said substrate; and
e) successively forming on said first layer at least one further layer of oriented polymer particles, each further layer being formed by:
i) coating a previously formed underlying layer of oriented polymer particles with said polymer dispersion to form on said underlying layer a further coating of said dispersion;
ii) contacting said further coating with a further particle orienting roller driven for rotation about a further longitudinal axis thereof independently of said substrate so as to have a further tangential speed at the surface of the coated substrate, said further particle orienting roller having a further particle orienting pattern arranged at a further angle relative to the travelling direction of said substrate to cause orientation of the polymer particles of said further coating along a further predetermined direction; and
iii) drying said further coating to cause evaporation of said liquid dispersing medium and formation of said further layer of oriented polymer particles on said underlying layer;
wherein at least one said further angle is different from said first angle or at least one said further tangential speed is different from said first tangential speed, thereby forming on said substrate an oriented multilayer polymeric film having at least two layers of polymer particles oriented along two different directions with respect to one another.

2. A method according to claim 1, wherein the longitudinal axis of said first particle orienting roller extends at right angle relative to the travelling direction of said substrate, and wherein said first predetermined direction is parallel to the travelling direction of said substrate.

3. A method according to claim 1, wherein said first particle orienting roller comprises a first cylindrical member rotatable about said first longitudinal axis and a first continuous helical land on said first cylindrical member over at least a portion of the length thereof, said first helical land forming a first continuous helical particle orienting groove along said first cylindrical member, and wherein said first land and said first groove define said first particle orienting pattern.

4. A method according to claim 3, wherein said first helical land is defined by a single wire helically and tightly wound about said portion of said first cylindrical member.

5. A method according to claim 3, wherein said first helical particle orienting groove is integrally defined in a peripheral surface of said first cylindrical member.

6. A method according to claim 3, wherein only one further layer of oriented polymer particles is formed in step (e), said first layer of oriented polymer particles defining said previously formed underlying layer of oriented polymer particles.

7. A method according to claim 6, wherein the longitudinal axis of said further particle orienting roller extends at right angle relative to the travelling direction of said substrate, and wherein said further predetermined direction is angled at about 5° to about 85° relative to the travelling direction of said substrate.

8. A method according to claim 7, wherein said further predetermined direction is angled at about 45° relative to the travelling direction of said substrate.

9. A method according to claim 6, wherein said further particle orienting roller comprises a further cylindrical member rotatable about said further longitudinal axis and a plurality of juxtaposed continuous further helical lands on said further cylindrical member over at least a portion of the length thereof, said further helical lands having a similar pitch and forming a series of further helical particle orienting grooves along said further cylindrical member, and wherein said further lands and said further grooves define said further particle orienting pattern.

10. A method according to claim 9, wherein said further helical lands are defined by a plurality of juxtaposed wires helically wound about said portion of said further cylindrical member, said further helical particle orienting grooves being each defined between adjacent wires.

11. A method according to claim 9, wherein said further helical lands are defined by a plurality of helical ribs integrally formed on a peripheral surface of said further cylindrical member, said further helical particle orienting grooves being each defined between adjacent ribs.

12. A method according to claim 9, wherein said further helical particle orienting grooves are integrally defined in a peripheral surface of said further cylindrical member.

13. A method according to claim 6, wherein the longitudinal axis of said further particle orienting roller and the travelling direction of said substrate are inclined at a tilt angle of about 5° to about 85° relative to one another, and wherein said further predetermined direction is at right angle relative to the longitudinal axis of said further particle orienting roller and is angled at an angle equal to said tilt angle relative to the travelling direction of said substrate.

14. A method according to claim 13, wherein said tilt angle is about 45°.

15. A method according to claim 13, wherein the longitudinal axis of said further particle orienting roller is inclined at said tilt angle relative to the travelling direction of said substrate.

16. A method according to claim 13, wherein the longitudinal axis of said further particle orienting roller is parallel to the longitudinal axis of said first particle orienting roller, and wherein the travelling direction of said substrate is varied prior to said further coating being contacted by said further particle orienting roller so as to be angled at said tilt angle relative to the longitudinal axis of said further particle orienting roller.

17. A method according to claim 13, wherein said further particle orienting roller comprises a further cylindrical member rotatable about said further longitudinal axis and a further continuous helical land on said further cylindrical member over at least a portion of the length thereof, said further helical land forming a further continuous helical particle orienting groove along said further cylindrical member, and wherein said further land and said further groove define said further particle orienting pattern.

18. A method according to claim 17, wherein said further helical land is defined by a single wire helically and tightly wound about said portion of said further cylindrical member.

19. A method according to claim 17, wherein said further helical particle orienting groove is integrally defined in a peripheral surface of said further cylindrical member.

20. A method according to claim 3, wherein two further layers of oriented polymer particles are formed in step (e) by:
i) coating said first layer of oriented polymer particles with said polymer dispersion to form on said first layer a second coating of said dispersion;
ii) contacting said second coating with a second particle orienting roller driven for rotation about a second longitudinal axis thereof independently of said substrate so as to have a second tangential speed at the surface of the coated substrate, said second particle orienting roller having a second particle orienting pattern arranged at a second angle relative to the travelling direction of said substrate to cause orientation of the polymer particles of said second coating along a second predetermined direction;
iii) drying said second coating to cause evaporation of said liquid dispersing medium and formation of a second layer of oriented polymer particles on said first layer;
iv) coating said second layer of oriented polymer particles with said polymer dispersion to form on said second layer a third coating of said dispersion;
v) contacting said third coating with a third particle orienting roller driven for rotation about a third longitudinal axis thereof independently of said substrate so as to have a third tangential speed at the surface of the coated substrate, said third particle orienting roller having a third particle orienting pattern arranged at a third angle relative to the travelling direction of said substrate to cause orientation of the polymer particles of said third coating along a third predetermined direction; and
vi) drying said third coating to cause evaporation of said liquid dispersing medium and formation of a third layer of oriented polymer particles on said second layer;
wherein said second angle is different from said first angle or said second tangential speed is different from said first tangential speed; whereby said second predetermined direction is different from said first predetermined direction, and wherein said third angle is different from said second angle or said third tangential speed is different from said second tangential speed, whereby said third predetermined direction is different from said second predetermined direction.

21. A method according to claim 20, wherein the longitudinal axis of said second particle orienting roller extends at right angle relative to the travelling direction of said substrate, and wherein said second predetermined direction is angled at about 5° to about 85° relative to the travelling direction of said substrate.

22. A method according to claim 21, wherein said second predetermined direction is angled at about 45° relative to the travelling direction of said substrate.

23. A method according to claim 21, wherein the longitudinal axis of said third particle orienting roller extends at right angle relative to the travelling direction of said substrate, and wherein said third predetermined direction is angled at about 5° to about 85° relative to the travelling direction of said substrate.

24. A method according to claim 20, wherein said second particle orienting roller comprises a second cylindrical member rotatable about said second longitudinal axis and a first plurality of juxtaposed continuous helical lands on said second cylindrical member over at least a portion of the length thereof, the helical lands of said first plurality having a similar pitch and forming a first series of helical particle orienting grooves along said second cylindrical member, the lands of said first plurality and the grooves of said first series defining said second particle orienting pattern, and wherein said third particle orienting roller comprises a third cylindrical member rotatable about said third longitudinal axis and a second plurality of juxtaposed continuous helical lands on said third cylindrical member over at least a portion of the length thereof, the helical lands of said second plurality having a similar pitch and forming a second series of helical particle orienting grooves along said third cylindrical member, the lands of said second plurality and the grooves of said second series defining said third particle orienting pattern.

25. A method according to claim 24, wherein the helical lands of said first plurality are defined by a plurality of juxtaposed wires helically wound about, said portion of said second cylindrical member, the helical particle orienting grooves of said first series being each defined between adjacent wires.

26. A method according to claim 24, wherein the helical lands of said first plurality are defined by a plurality of helical ribs integrally formed on a peripheral surface of said second cylindrical member, the helical particle orienting grooves of said first series being each defined between adjacent ribs.

27. A method according to claim 24, wherein the helical particle orienting grooves of said first series are integrally defined in a peripheral surface of said second cylindrical member.

28. A method according to claim 24, wherein the helical lands of said second plurality are defined by a plurality of juxtaposed wires helically wound about said portion of said third cylindrical member, the helical particle orienting grooves of said second series being each defined between adjacent wires.

29. A method according to claim 24, wherein the helical lands of said second plurality are defined by a plurality of helical ribs integrally formed on a peripheral surface of said third cylindrical member, the helical particle orienting grooves of said second series being each defined between adjacent ribs.

30. A method according to claim 24, wherein the helical particle orienting grooves of said second series are integrally defined in a peripheral surface of said third cylindrical member.

31. A method according to claim 24, wherein said third particle orienting pattern is the same as said second particle orienting pattern, and wherein said third tangential speed is different from said second tangential speed.

32. A method according to claim 21, wherein the longitudinal axis of said third particle orienting roller extends at right angle relative to the travelling direction of said substrate, and wherein said third predetermined direction is the same as said first predetermined direction.

33. A method according to claim 20, wherein said second particle orienting roller comprises a second cylindrical member rotatable about said second longitudinal axis and a plurality of juxtaposed continuous further helical lands on said second cylindrical member over at least a portion of the length thereof, said further helical lands having a similar pitch and forming a series of further helical particle orienting grooves along said second cylindrical member, said further lands and said further grooves defining said second particle orienting pattern, and wherein said third particle orienting roller comprises a third cylindrical member rotatable about said third longitudinal axis and another continuous helical land on said third cylindrical member over at least a portion of the length thereof, said other helical land forming another continuous helical particle orienting groove along said third cylindrical member, and wherein said other land and said other groove define said third particle orienting pattern.

34. A method according to claim 33, wherein said further helical lands are defined by a plurality of juxtaposed wires helically wound about said portion of said second cylindrical member, said further helical particle orienting grooves being each defined between adjacent wires.

35. A method according to claim 33, wherein said further helical lands are defined by a plurality of helical ribs integrally formed on a peripheral surface of said second cylindrical member, said further helical particle orienting grooves being each defined between adjacent ribs.

36. A method according to claim 33, wherein said further helical particle orienting grooves are integrally defined in a peripheral surface of said second cylindrical member.

37. A method according to claim 33, wherein said other helical land is defined by a single wire helically and tightly wound about said portion of said third cylindrical member.

38. A method according to claim 33, wherein said other helical particle orienting groove is integrally defined in a peripheral surface of said third cylindrical member.

39. A method according to claim 33, wherein said third particle orienting pattern is the same as said first particle orienting pattern, and wherein said third tangential speed is the same as said first tangential speed.

40. A method according to claim 20, wherein the longitudinal axis of said second particle orienting roller and the travelling direction of said substrate are inclined at a tilt angle of about 5° to about 85° relative to one another, and wherein said second predetermined direction is at right angle relative to the longitudinal axis of said second particle orienting roller and is angled at an angle equal to said tilt angle relative to the travelling direction of said substrate.

41. A method according to claim 40, wherein said tilt angle is about 45°.

42. A method according to claim 40, wherein the longitudinal axis of said second particle orienting roller is inclined at said tilt angle relative to the travelling direction of said substrate.

43. A method according to claim 40, wherein the longitudinal axis of said second particle orienting roller is parallel to the longitudinal axis of said first particle orienting roller, and wherein the travelling direction of said substrate is varied prior to said second coating being contacted by said second particle orienting roller so as to be angled at said tilt angle relative to the longitudinal axis of said second particle orienting roller.

44. A method according to claim 40, wherein the longitudinal axis of said third particle orienting roller extends at right angle relative to the travelling direction of said substrate, and wherein said third predetermined direction is the same as said first predetermined direction.

45. A method according to claim 40, wherein said second particle orienting roller comprises a second cylindrical member rotatable about said second longitudinal axis and a second continuous helical land on said second cylindrical member over at least a portion of the length thereof, said second helical land forming a second continuous helical particle orienting groove along said second cylindrical member, said second land and said second groove defining said second particle orienting pattern, and wherein said third particle orienting roller comprises a third cylindrical member rotatable about said third longitudinal axis and a third continuous helical land on said third cylindrical member over at least a portion of the length thereof, said third helical land forming a third continuous helical particle orienting groove along said third cylindrical member, said third land and said third groove defining said third particle orienting pattern.

46. A method according to claim 45, wherein said second helical land is defined by a single wire helically and tightly wound about said portion of said second cylindrical member.

47. A method according to claim 45, wherein said second helical particle orienting groove is integrally defined in a peripheral surface of said second cylindrical member.

48. A method according to claim 45, wherein said third helical land is defined by a single wire helically and tightly wound about said portion of said third cylindrical member.

49. A method according to claim 45, wherein said third helical particle orienting groove is integrally defined in a peripheral surface of said third cylindrical member.

50. A method according to claim 45, wherein said second and third particle orienting patterns are the same as said first particle orienting pattern, said first and second tangential speed are the same as said first tangential speed, and wherein said second angle is different from said first angle and said third angle is the same as said first angle.

51. A method according to claim 1, wherein said substrate is in the form of a continuous web.

52. A method according to claim 1, wherein said polymer particles are particles of a waterborne polymer.

53. A method according to claim 52, wherein said waterborne polymer is selected from the group consisting of polyvinylidene chloride, polyvinyl acetate, polyvinyl alcohol and styrene-butadiene copolymers.

54. A method according to claim 52, wherein said liquid dispersing medium comprises water, an alcohol or a mixture thereof.

55. Use of a particle orienting roller for orienting polymer particles present in a polymer dispersion coated on a substrate, said particle orienting roller comprising a cylindrical member rotatable about a longitudinal axis thereof and a plurality of juxtaposed continuous helical lands on said cylindrical member over at least a portion of the length thereof, said helical lands having a similar pitch and forming a series of helical particle orienting grooves along said cylindrical member for imparting a predetermined orientation to the polymer particles when said cylindrical member is rotated while being in contact with the polymer dispersion.

56. Use of a roller according to claim 55, wherein said helical lands are defined by a plurality of juxtaposed wires helically wound about said portion of said cylindrical member, said helical particle orienting grooves being each defined between adjacent wires.

57. Use of a orienting roller according to claim 55, wherein said helical lands are defined by a plurality of helical ribs integrally formed on a peripheral surface of said cylindrical member, said helical particle orienting grooves being each defined between adjacent ribs.

58. Use of a roller according to claim 55, wherein said helical particle orienting grooves are integrally defined in a peripheral surface of said cylindrical member.

59. Use of a roller according to claim 55, wherein the pitch of said helical lands is uniform along said portion of said cylindrical member.

60. A substrate coated with an oriented multilayer polymeric film, wherein said film comprises at least two layers of polymer particles oriented along two different directions with respect to one another.

61. A coated substrate according to claim 60, wherein said film has a first layer comprising polymer particles oriented along a first direction, a second layer disposed on said first layer and comprising polymer particles oriented along a second direction angled at about 45° relative to said first direction, and a third layer disposed on said second layer and comprising polymer particles oriented along a third direction parallel to said first direction.

62. A coated substrate according to claim 60, wherein said polymer particles are particles of a waterborne polymer.

63. A coated substrate according to claim 62, wherein said waterborne polymer is selected from the group consisting of polyvinylidene chloride, polyvinyl acetate, polyvinyl alcohol and styrene-butadiene copolymers.

## Patentansprüche

1. Verfahren zur Herstellung eines orientierten mehrschichtigen Polymerfilms auf einem Substrat, umfassend die Stufen von:
a) Fördern des Substrates längs eines vorbestimmten Pfades mit einer vorbestimmten Laufgeschwindigkeit und in einer vorbestimmten Laufrichtung;
b) Beschichten des Substrates mit einer Polymerdispersion, die Polymerteilchen und ein flüssiges Dispergiermedium enthält, um auf diesem Substrat eine erste Beschichtung dieser Dispersion zu bilden;
c) Inkontaktbringen dieser ersten Beschichtung mit einer ersten teilchenorientierenden Walze, die zur Rotation um eine erste Längsachse hiervon unabhängig von diesem Substrat angetrieben wird, so daß sie eine erste Tangentialgeschwindigkeit auf einer Oberfläche des beschichteten Substrates hat, wobei diese erste teilchenorientierende Walze ein erstes teilchenorientierendes Muster, angeordnet in einem ersten Winkel relativ zu der Laufrichtung dieses Substrates, hat, um Orientierung der Polymerteilchen dieser ersten Beschichtung längs einer vorbestimmten Richtung zu bewirken;
d) Trocknen dieser ersten Beschichtung zum Bewirken des Verdampfens dieses flüssigen Dispergiermediums und Bildung einer ersten Schicht von orientierten Polymerteilchen auf diesem Substrat; und
e) aufeinanderfolgend Bilden auf dieser ersten Schicht wenigstens einer weiteren Schicht von orientierten Polymerteilchen, wobei jede weitere Schicht gebildet wird durch:
i) Beschichten einer zuvor gebildeten, unterliegenden Schicht von orientierten Polymerteilchen mit dieser Polymerdispersion zum Bilden auf dieser unterliegenden Schicht einer weiteren Beschichtung dieser Dispersion;
ii) Inkontaktbringen dieser weiteren Beschichtung mit einer weiteren teilchenorientierenden Walze, die zur Rotation um eine weitere Längsachse hiervon unabhängig von diesem Substrat angetrieben wird, so daß sie eine weitere Tangentialgeschwindigkeit auf der Oberfläche des beschichteten Substrates hat, wobei diese weitere teilchenorientierende Walze ein weiteres teilchenorientierendes Muster, angeordnet in einem weiteren Winkel relativ zu der Laufrichtung dieses Substrates, hat, um Orientierung der Polymerteilchen dieser weiteren Beschichtung längs einer weiteren vorbestimmten Richtung zu bewirken; und
iii) Trocknen dieser weiteren Beschichtung zum Bewirken des Verdampfens dieses flüssigen Dispergiermediums und Bildung dieser weiteren Schicht von orientierten Polymerteilchen auf dieser unterliegendem Schicht;
bei welchem wenigstens einer dieser weiterer Winkel von diesem ersten Winkel verschieden ist oder wenigstens eine dieser weiteren Tangentialgeschwindigkeiten von dieser ersten Tangentialgeschwindigkeit verschieden ist, um hierdurch auf diesem Substrat einen orientierten mehrschichtigen Polymerfilm zu bilden, der wenigstens zwei Schichten von Polymerteilchen hat, die längs zwei unterschiedlichen Richtungen in Bezug zueinander orientiert sind.

2. Verfahren nach Anspruch 1, bei welchem die Längsachse dieser ersten teilchenorientierenden Walze sich in rechtem Winkel relativ zu der Laufrichtung dieses Substrates erstreckt, und bei welchem diese erste vorbestimmte Richtung parallel zu der Laufrichtung dieses Substrates ist.

3. Verfahren nach Anspruch 1, bei welchem diese erste teilchenorientierende Walze ein erstes zylindrisches Teil, das um diese erste Längsachse rotierbar ist und einen ersten kontinuierlichen spiralförmigen Grat auf diesem ersten zylindrischen Teil über wenigstens einem Abschnitt der Länge hiervon umfaßt, wobei dieser erste spiralförmige Grat eine erste kontinuierliche spiralförmige Vertiefung längs diesem ersten zylindrischen Teil bildet, und bei welchem dieser erste Grat und diese erste Vertiefung dieses erste teilchenorientierende Muster bilden.

4. Verfahren nach Anspruch 3, bei welchem dieser erste spiralförmige Grat durch einen einzigen Draht gebildet ist, der spiralförmig und dicht um diesen Abschnitt dieses ersten zylindrischen Teiles gewickelt ist.

5. Verfahren nach Anspruch 3, bei welchem diese erste spiralförmige teilchenorientierende Vertiefung integral in einer peripheren Oberfläche dieses ersten zylindrischen Teiles ausgebildet ist.

6. Verfahren nach Anspruch 3, bei welchem nur eine weitere Schicht von orientierten Polymerteilchen in Stufe (e) gebildet wird, wobei diese erste Schicht von orientierten Polymerteilchen diese zuvor gebildete unterliegende Schicht von orientierten Polymerteilchen bildet.

7. Verfahren nach Anspruch 6, bei welchem die Längsachse von dieser weiteren teilchenorientierenden Walze sich in rechtem Winkel relativ zu der Laufrichtung dieses Substrates erstreckt, und bei welchem diese weitere vorbestimmte Richtung in einem Winkel von etwa 5° bis etwa 85° relativ zu der Laufrichtung dieses Substrates eingestellt ist.

8. Verfahren nach Anspruch 7, bei welchem diese weitere vorbestimmte Richtung in einem Winkel von etwa 45° relativ zu der Laufrichtung dieses Substrates eingestellt ist.

9. Verfahren nach Anspruch 6, bei welchem diese weitere teilchenorientierende Walze ein weiteres zylindrisches Teil, das um diese weitere Längsachse rotierbar ist, und eine Vielzahl von nebeneinander angeordneten kontinuierlichen spiralförmigen Graten auf diesem zylindrischen Teil über wenigstens einem Abschnitt der Länge hiervon umfaßt, wobei diese weiteren spiralförmigen Grate eine ähnliche Ganghöhe haben und eine Reihe von weiteren spiralförmigen teilchenorientierenden Vertiefungen längs diesem weiteren zylindrischen Teil bilden, und bei welchem diese weiteren Grate und diese weiteren Vertiefungen dieses weitere teilchenorientierende Muster definieren.

10. Verfahren nach Anspruch 9, bei welchem diese weiteren spiralfömigen Grate durch eine Vielzahl von nebeneinander angeordneten Drähten, die spiralförmig um diesen Abschnitt dieses weiteren zylindrischen Teiles gewickelt sind, gebildet werden, wobei diese weiteren spiralförmigen teilchenorientierenden Vertiefungen jeweils zwischen benachbarten Drähten ausgebildet sind.

11. Verfahren nach Anspruch 9, bei welchem diese weiteren spiralfömigen Grate durch eine Vielzahl von nebeneinander angeordneten spiralförmigen Rippen gebildet sind, die integral auf einer peripheren Oberfläche von diesem weiteren zylinlindrischen Teil gebildet sind, wobei diese weiteren spiralförmigen teilchenorientierenden Vertiefungen jeweils zwischen benachbarten Rippen ausgebildet sind.

12. Verfahren nach Anspruch 9, bei welchem diese weiteren spiralförmigen teilchenorientierenden Vertiefungen integral in einer peripheren Oberfläche dieses weiteren zylindrischen Teiles ausgebildet sind.

13. Verfahren nach Anspruch 6, bei welchem die Längsachse dieser weiteren teilchenorientierenden Walze und die Laufrichtung dieses Substrates mit einem Neigungswinkel von etwa 5° bis etwa 85° relativ zueinander geneigt sind, und bei welchem diese weitere vorbestimmte Richtung in rechtem Winkel relativ zu der Längsachse dieser weiteren teilchenorientierenden Walze vorliegt und in einem Winkel gleich diesem Neigungswinkel relativ zu der Laufrichtung dieses Substrates vorliegt.

14. Verfahren nach Anspruch 13, bei welchem dieser Neigungswinkel etwa 45° ist.

15. Verfahren nach Anspruch 13, bei welchem die Längsachse dieser weiteren teilchenorientierenden Walze mit diesem Neigungswinkel relativ zu der Laufrichtung dieses Substrates geneigt ist.

16. Verfahren nach Anspruch 13, bei welchem die Längsachse dieser weiteren teilchenorientierenden Walze parallel zu der Längsachse dieser ersten teilchenorientierenden Walze vorliegt, und bei welchem die Laufrichtung dieses Substrates verändert wird, bevor diese weitere Beschichtung mit dieser weiteren teilchenorientierenden Walze kontaktiert wird, so daß sie mit diesem Neigungswinkel relativ zu der Längsachse dieser weiteren teilchenorientierenden Walze im Winkel eingestellt ist.

17. Verfahren nach Anspruch 13, bei welchem diese weitere teilchenorientierende Walze ein weiteres um diese weitere Längsachse rotierbares zylindrisches Teil und einen weiteren kontinuierlichen spiralförmige Grat auf diesem weiteren zylindrischen Teil über wenigstens einem Abschnitt der Länge hiervon umfaßt, wobei diese weitere spiralförmige Grat eine weitere kontinuierliche spiralförmige teilchenorientierende Vertiefung längs dieses weiteren zylindrischen Teiles bildet, und bei welchem dieser weitere Grat und diese weitere Vertiefung dieses weitere teilchenorientierende Muster bilden.

18. Verfahren nach Anspruch 17, bei welchem dieses weitere spiralförmige Feld durch einen einzigen Draht gebildet ist, der spiralförmig und dicht um diesen Abschnitt dieses weiteren zylindrischen Teiles gewickelt ist.

19. Verfahren nach Anspruch 17, bei welchem diese weitere spiralförmige teilchenorientierende Vertiefung integral in einer peripheren Oberfläche dieses weiteren zylindrischen Teiles ausgebildet ist.

20. Verfahren nach Anspruch 3, bei welchem zwei weitere Schichten von orientierten Polymerteilchen in Stufe (e) gebildet werden durch:
i) Beschichten dieser ersten Schicht von orientierten Polymerteilchen mit dieser Polymerdispersion zur Bildung einer zweiten Beschichtung dieser Dispersion auf dieser ersten Schicht;
ii) Inkontaktbringen dieser zweiten Beschichtung mit einer zweiten teilchenorientierenden Walze, die zur Rotation um eine zweite Längsachse hiervon unabhängig von diesem Substrat angetrieben wird, so daß sie eine zweite Tangentialgeschwindigkeit auf der Oberfläche des beschichteten Substrates hat, wobei diese zweite teilchenorientierende Walze ein zweites teilchenorientierendes Muster, angeordnet in einem zweiten Winkel relativ zu der Laufrichtung dieses Substrates, hat, um Orientierung der Polymerteilchen dieser zweiten Beschichtung längs einer zweiten vorbestimmten Richtung zu bewirken;
iii) Trocknen dieser zweiten Beschichtung zum Bewirken des Verdampfens dieses flüssigen Dispergiermediums und Bildung einer zweiten Schicht von orientierten Polymerteilchen auf dieser ersten Schicht;
iv) Beschichten dieser zweiten Schicht von orientierten Polymerteilcehn mit dieser Polymerdispersion zur Bildung einer dritten Beschichtung dieser Dispersion auf dieser zweiten Schicht;
v) Inkontaktbringen dieser dritten Beschichtung mit einer dritten teilchenorientierenden Walze, die zur Rotation um eine dritte Längsachse hiervon unabhängig von diesem Substrat angetrieben wird, so daß sie eine dritte Tangentialgeschwindigkeit auf der Oberfläche des beschichteten Substrates hat, wobei diese dritte teilchenorientierende Walze ein drittes teilchenorientierendes Muster, angeordnet in einem dritten Winkel relativ zu der Laufrichtung dieses Substrates, hat, um Orientierung der Polymerteilchen dieser dritten Beschichtung längs einer dritten vorbestimmten Richtung zu bewirken; und
vi) Trocknen dieser dritten Beschichtung zum Bewirken des Verdampfens dieses flüssigen Dispergiermediums und Bildung einer dritten Schicht von orientierten Polymerteilchen auf dieser zweiten Schicht;
bei welchem dieser zweite Winkel von dem ersten Winkel verschieden ist oder diese zweite Tangentialgeschwindigkeit von der ersten Tangentialgeschwindigkeit verschieden ist, wodurch diese zweite vorbestimmte Richtung von der ersten vorbestimmten Richtung verschieden ist, und bei welchem dieser dritte Winkel von dem zweiten Winkel verschieden ist oder diese dritte Tangentialgeschwindigkeit von dieser zweiten Tangentialgeschwindigkeit verschieden ist, wodurch diese dritte vorbestimmte Richtung von dieser zweiten vorbestimmten Richtung verschieden ist.

21. Verfahren nach Anspruch 20, bei welchem die Längsachse dieser zweiten teilchenorientierenden Walze sich in rechtem Winkel relativ zu der Laufrichtung dieses Substrates erstreckt, und bei welchem diese zweite vorbestimmte Richtung in einem Winkel von etwa 5° bis etwa 85° relativ zu der Laufrichtung dieses Substrates eingestellt ist.

22. Verfahren nach Anspruch 21, bei welchem diese weitere vorbestimmte Richtung in einem Winkel von etwa 45° relativ zu der Laufrichtung dieses Substrates angeordnet ist.

23. Verfahren nach Anspruch 21, bei welchem die Längsachse dieser dritten teilchenorientierenden Walze sich in rechtem Winkel relativ zu der Laufrichtung dieses Substrates erstreckt, und bei welchem diese zweite vorbestimmte Richtung in einem Winkel von etwa 5° bis etwa 85° relativ zu der Laufrichtung dieses Substrates angeordnet ist.

24. Verfahren nach Anspruch 20, bei welchem diese zweite teilchenorientierende Walze ein zweites um diese zweite Längsachse rotierbares zylindrisches Teil und eine erste Vielzahl von nebeneinander angeordneten kontinuierlichen spiralförmigen Graten auf diesem zweiten zylindrischen Teil über wenigstens einem Abschnitt der Länge hiervon umfaßt, wobei die spiralförmigen Grate dieser ersten Vielzahl eine ähnliche Ganghöhe haben und eine erste Reihe von spiralförmigen teilchenorientierenden Vertiefungen längs dieses zweiten zylindrischen Teiles bilden, wobei die Grate dieser ersten Vielzahl und die Vertiefungen dieser ersten Reihe dieses zweite teilchenorientierende Muster bilden, und bei welchem diese dritte teilchenorientierende Walze ein drittes um diese Längsachse rotierbares Teil und eine zweite Vielzahl von nebeneinander angeordneten kontinuierlichen spiralförmigen Graten über wenigstens einem Teil der Länge hiervon umfaßt, wobei die spiralförmigen Grate eine ähnliche Ganghöhe haben und eine zweite Reihe von spiralförmigen teilchenorientierenden Vertiefungen längs dieses dritten zylindrischen Teiles bilden, wobei die Grate dieser zweiten Vielzahl und die Vertiefungen dieser zweiten Reihen dieses dritte teilchenorientierende Muster bilden.

25. Verfahren nach Anspruch 24, bei welchem die spiralförmigen Grate dieser ersten Vielzahl durch eine Vielzahl von nebeneinander angeordneten Drähten gebildet werden, die spiralförmig um diesen Abschnitt dieses zweiten zylindrischen Teiles gewickelt sind, wobei die spiralförmigen teilchenorientierenden Vertiefungen dieser ersten Reihe jeweils zwischen benachbarten Drähten ausgebildet sind.

26. Verfahren nach Anspruch 24, bei welchem die spiralförmigen Grate dieser ersten Vielzahl durch eine Vielzahl von spiralförmigen Rippen gebildet werden, die integral auf einer peripheren Oberfläche von diesem zweiten zylindrischen Teil gebildet sind, wobei die spiralförmigen teilchenorientierenden Vertiefungen jeweils zwischen benachbarten Rippen begrenzt sind.

27. Verfahren nach Anspruch 24, bei welchem die spiralförmigen teilchenorientierenden Vertiefungen dieser ersten Reihen integral in einer peripheren Oberfläche dieses zweiten zylindrischen Teiles ausgebildet sind.

28. Verfahren nach Anspruch 24, bei welchem die spiralförmigen Felder dieser zweiten Vielzahl durch eine Vielzahl von nebeneinander angeordneten Drähten gebildet werden, die um diesen Abschnitt dieses dritten zylindrischen Teiles gewickelt sind, wobei die spiralförmigen teilchenorientierenden Vertiefungen dieser zweiten Reihe jeweils zwischen benachbarten Drähten begrenzt sind.

29. Verfahren nach Anspruch 24, bei welchem die spiralförmigen Grate dieser zweiten Vielzahl durch eine Vielzahl von spiralförmigen Rippen gebildet werden, die integral auf einer peripheren Oberfläche dieses dritten zylindrischen Teiles gebildet sind, wobei die spiralförmigen teilchenorientierenden Vertiefungen dieser zweiten Reihen jeweils zwischen benachbarten Rippen ausgebildet sind.

30. Verfahren nach Anspruch 24, bei welchem die spiralförmigen teilchenorientierenden Vertiefungen dieser zweiten Reihe integral in einer peripheren Oberfläche dieses dritten zylindrichen Teiles ausgebildet sind.

31. Verfahren nach Anspruch 24, bei welchem dieses dritte teilchenorientierende Muster dasselbe wie dieses zweite teilchenorientierende Muster ist, und bei welchem diese dritte Tangentialgeschwindigkeit von dieser zweiten Tangentialgeschwindigkeit verschieden ist.

32. Verfahren nach Anspruch 21, bei welchem die Längsachse dieser dritten teilchenorientierenden Walze sich in rechtem Winkel relativ zu der Laufrichtung dieses Substrates erstreckt, und bei welchem diese dritte vorbestimmte Richtung dieselbe wie diese erste vorbestimmte Richtung ist.

33. Verfahren nach Anspruch 20, bei welchem diese zweite teilchenorientierende Walze ein zweites um diese zweite Längsachse rotierbares zylindrisches Teil und eine Vielzahl von nebeneinander angeordneten kontinuierlichen weiteren spiralförmigen Graten auf diesem zweiten zylindrischen Teil über wenigstens einem Abschnitt der Länge hiervon umfaßt, wobei diese weiteren spiralförmigen Grate eine ähnliche Ganghöhe haben und eine Reihe von weiteren spiralförmigen teilchenorientierenden Vertiefungen längs dieses zweiten zylindrischen Teiles bilden, wobei diese weiteren Grate und diese weiteren Vertiefungen dieses zweite teilchenorientierende Muster bilden, und bei welchem diese dritte teilchenorientierende Walze ein drittes um diese dritte Längsachse rotierbares zylindrische Teil und einen weiteren kontinuierlichen Grat auf diesem dritten zylindrischen Teil über wenigstens einem Teil der Länge hiervon umfaßt, wobei dieser andere spiralförmige Grat eine andere kontinuierliche spiralförmige teilchenorientierende Vertiefung längs dieses dritten zylindrischen Teiles bildet, und bei welchem dieser andere Grat und diese andere Vertiefung dieses dritte teilchenorientierende Muster bilden.

34. Verfahren nach Anspruch 33, bei welchem diese weiteren spiralförmigen Grate durch eine Vielzahl von nebeneinander angeordneten Drähten gebildet werden, die um diesen Abschnitt spiralförmig gewickelt sind, wobei diese weiteren spiralförmigen teilchenorientierenden Vertiefungen jeweils zwischen benachbarten Drähten ausgebildet sind.

35. Verfahren nach Anspruch 33, bei welchem diese weiteren spiralförmigen Grate durch eine Vielzahl von spiralförmigen Rippen gebildet werden, die integral auf einer peripheren Oberfläche von diesem zweiten zylindrischen Teil gebildet sind, wobei diese weiteren spiralförmigen teilchenorientierenden Vertiefungen jeweils zwischen benachbarten Rippen ausgebildet sind.

36. Verfahren nach Anspruch 33, bei welchem diese weiteren spiralförmigen teilchenorientierenden Vertiefungen integral in einer peripheren Oberfläche dieses weiteren zylindrischen Teiles ausgebildet sind.

37. Verfahren nach Anspruch 33, bei welchem dieser andere spiralförmige Grat durch einen einzigen Draht gebildet wird, der spiralförmig und dicht um diesen Abschnitt dieses dritten zylindrischen Teiles gewickelt ist.

38. Verfahren nach Anspruch 33, bei welchem dieses andere teilchenorientierende Vertiefung integral in einer peripheren Oberfläche dieses dritten zylindrischen Teiles ausgebildet ist.

39. Verfahren nach Anspruch 33, bei welchem dieses dritte teilchenorientierende Muster dasselbe wie dieses erste teilchenorientierende Muster ist, und bei welchem diese dritte Tangentialgeschwindigkeit dieselbe wie diese erste Tangentialgeschwindigkeit ist.

40. Verfahren nach Anspruch 20, bei welchem die Längsachse dieser zweiten teilchenorientierenden Walze und die Laufrichtung dieses Substrates mit einem Neigungswinkel von etwa 5° bis etwa 85° relativ zueinander geneigt sind, und bei welchem diese zweite vorbestimmte Richtung in rechtem Winkel relativ zu der Längsachse dieser zweiten teilchenorientierenden Walze vorliegt und in einem Winkel gleich diesem Neigungswinkel relativ zu der Laufrichtung dieses Substrates vorliegt.

41. Verfahren nach Anspruch 40, bei welchem dieser Neigungswinkel etwa 45° ist.

42. Verfahren nach Anspruch 40, bei welchem die Längsachse dieser zweiten teilchenorientierenden Walze mit diesem Neigungswinkel relativ zu der Laufrichtung dieses Substrates geneigt ist.

43. Verfahren nach Anspruch 40, bei welchem die Längsachse dieser zweiten teilchenorientierenden Walze parallel zu der Längsachse dieser ersten teilchenorientierenden Walze vorliegt, und bei welchem die Laufrichtung dieses Substrates verändert wird, bevor diese zweite Beschichtung mit dieser zweiten teilchenorientierenden Walze kontaktiert wird, so daß sie mit diesem Neigungswinkel relativ zu der Längsachse dieser weiteren teilchenorientierenden Walze im Winkel eingestellt ist.

44. Verfahren nach Anspruch 40, bei welchem die Längsachse dieser zweiten teilchenorientierenden Walze sich in rechtem Winkel relativ zu der Laufrichtung dieses Substrates ersteckt, und bei welchem diese dritte vorbestimmte Richtung dieselbe wie diese erste vorbestimmte Richtung ist.

45. Verfahren nach Anspruch 40, bei welchem diese zweite teilchenorientierende Walze eine zweites um diese zweite Längsachse rotierbares zylindrisches Teil und einen zweiten spiralförmigen Grat auf diesem zweiten zylindrischen Teil über wenigstens einem Abschnitt der Länge hiervon umfaßt, wobei dieser zweite spiralförmige Grat eine zweite kontinuierliche spiralförmige teilchenorientierende Vertiefung längs dieses weiteren zylindrischen Teiles bildet, wobei dieser zweite Grat und diese zweite Vertiefung dieses zweite teilchenorientierende Muster bilden, und bei welchem diese dritte teilchenorientierende Walze ein drittes um diese dritte Längsachse rotierbares zylindrisches Teil und einen dritten kontinuierlichen spiralförmigen Grat auf diesem dritten zylindrischen Teil über wenigstens einem Teil der Länge hiervon umfaßt, wobei dieser dritte spiralförmige Grat eine dritte kontinuierliche spiralförmige teilchenorientierende Vertiefung längs dieses dritten zylindrischen Teiles bildet, und wobei dieser dritte Grat und diese dritte Vertiefung dieses dritte teilchenorientierende Muster bilden.

46. Verfahren nach Anspruch 45, bei welchem dieser zweite spiralförmige Grat durch einen einzigen Draht gebildet wird, der spiralförmig und dicht um diesen Abschnitt dieses zweiten zylindrischen Teiles gewickelt ist.

47. Verfahren nach Anspruch 45, bei welchem diese zweite spiralförmigen teilchenorientierenden Vertiefung integral in einer peripheren Oberfläche dieses zweiten zylindrischen Teiles ausgebildet ist.

48. Verfahren nach Anspruch 45, bei welchem dieser dritte spiralförmige Grat durch einen einzigen Draht begrenzt wird, der spiralförmig und dicht um diesen Abschnitt dieses dritten zylindrischen Teiles gewickelt ist.

49. Verfahren nach Anspruch 45, bei welchem diese dritte spiralförmigen teilchenorientierenden Vertiefung integral in einer peripheren Oberfläche dieses dritten zylindrischen Teiles ausgebildet ist.

50. Verfahren nach Anspruch 45, bei welchem diese zweiten und dritten teilchenorientierenden Muster dieselben wie dieses erste teilchenorientierende Muster sind, und bei welchem diese erste und zweite Tangentialgeschwindigkeit dieselben wie diese erste Tangentialgeschwindigkeit sind, und bei welchem dieser zweite Winkel von diesem ersten Winkel verschieden ist und dieser dritte Winkel derselbe wie dieser erste Winkel ist.

51. Verfahren nach Anspruch 1, bei welchem dieses Substrat in Form einer kontinuierlichen Bahn vorliegt.

52. Verfahren nach Anspruch 1, bei welchem diese Polymerteilchen Teilchen eines wassergetragenen Polymeren sind.

53. Verfahren nach Anspruch 52, bei welchem dieses wassergetragene Polymere aus der Gruppe ausgewählt ist, die aus Polyvinylidenchlorid, Polyvinylacetat, Polyvinylalkohol und Styrol-Butadiencopolymeren besteht.

54. Verfahren nach Anspruch 52, bei welchem dieses flüssige Dispergiermedium Wasser, einen Alkohol oder Mischungen hiervon umfaßt.

55. Verwendung einer teilchenorientierenden Walze zur Orientierung auf einem Substrat von in einer Polymerdispersion vorhandenen Polymerteilchen, wobei diese teilchenorientierende Walze ein um eine Längsachse hiervon rotierbares zylindrisches Teil und eine Vielzahl von nebeneinander angeordneten kontinuierlichen spiralförmigen Graten auf diesem zylindrischen Teil über wenigstens einem Abschnitt der Länge hiervon umfaßt, wobei diese spiralförmigen Grate eine ähnliche Ganghöhe haben und eine Reihe von spiralförmigen teilchenorientierenden Vertiefungen längs diesem zylindrischen Teil bilden, um den Polymerteilchen eine vorbestimmte Orientierung zu erteilen, wenn dieses zylindrische Teil rotiert wird, während es in Kontakt mit der Polymerdispersion ist.

56. Verwendung einer Walze nach Anspruch 55, bei welcher diese spiralförmigen Grate durch eine Vielzahl von nebeneinander angeordneten Drähten gebildet werden, die um diesen Abschnitt von diesem zylindrischen Teil spiralförmig gewikkelt sind, wobei diese spiralförmigen teilchenorientierenden Vertiefungen jeweils zwischen benachbarten Drähten ausgebildet sind.

57. Verwendung einer Orientierungswalze nach Anspruch 55, bei welcher diese spiralförmigen Grate durch eine Vielzahl von spiralförmigen Rippen gebildet werden, die integral auf einer peripheren Oberfläche von diesem zylindrischen Teil gebildet sind, wobei diese spiralförmigen teilchenorientierenden Vertiefungen jeweils zwischen benachbarten Rippen ausgebildet sind. ,

58. Verwendung einer Walze nach Anspruch 55, bei welcher diese spiralförmigen teilchenorientierenden Vertiefungen integral in einer peripheren Oberfläche dieses zylindrischen Teiles ausgebildet sind.

59. Verwendung einer Walze nach Anspruch 55, bei welcher die Ganghöhe dieser spiralförmigen Grate gleichmäßig längs dieses Abschnittes dieses zylindrischen Teiles ist.

60. Substrat, beschichtet mit einem orientierten mehrschichtigen Polymerfilm, bei welchem dieser Film wenigstens zwei Schichten von Polymerteilchen umfaßt, die längs zwei unterschiedlichen Richtungen mit Bezug aufeinander orientiert sind.

61. Beschichtetes Substrat nach Anspruch 60, bei welchem dieser Film aufweist: eine erste Schicht, die längs einer ersten Richtung orientierte Polymerteilchen umfaßt, eine zweite Schicht, die auf dieser ersten angeordnet ist und Polymerteilchen umfaßt, die längs einer zweiten Richtung orientiert sind, welche mit etwa 45° relativ zu dieser ersten Richtung eingestellt ist, und eine dritte Schicht, die auf dieser zweiten Schicht angeordnet ist und Polymerteilchen umfaßt, die längs einer dritten Richtung parallel zu dieser ersten Richtung orientiert sind.

62. Beschichtetes Substrat nach Anspruch 60, bei welchem diese Polymerteilchen Teilchen eines wassergetragenen Polymeren sind.

63. Beschichtetes Substrat nach Anspruch 62, bei welchem dieses wassergetragene Polymere aus der Gruppe ausgewählt ist, die aus Polyvinylidenchlorid, Polyvinylacetat, Polyvinylalkohol und Styrol-Butadiencopolymeren besteht.

## Revendications

1. Procédé de formation d'un film de polymère multicouche orienté sur un substrat, comprenant les étapes consistant à :
a) faire avancer un substrat sur un chemin prédéterminé à une vitesse d'avance prédéterminée et dans une direction d'avance prédéterminée ;
b) revêtir le substrat d'une dispersion de polymère contenant des particules de polymère et un milieu liquide dispersant pour former sur ledit substrat un premier revêtement de cette dispersion ;
c) mettre au contact dudit premier revêtement un premier rouleau orientant les particules entraîné en rotation autour d'un premier axe longitudinal de celui-ci indépendamment dudit substrat afin d'avoir une première vitesse tangentielle dans une surface du substrat revêtu, ledit premier rouleau orientant les particules ayant un premier motif d'orientation des particules disposé avec un premier angle par rapport à la direction d'avance dudit substrat pour provoquer l'orientation des particules de polymère dudit premier revêtement selon une première direction prédéterminée ;
d) faire sécher ledit premier revêtement pour provoquer l'évaporation dudit milieu liquide dispersant et la formation d'une première couche de particules de polymère orientées sur ledit substrat ; et
e) former successivement sur ladite première couche au moins une couche supplémentaire de particules de polymère orientées, chaque couche supplémentaire étant formée par les opérations consistant à :
i) revêtir de ladite dispersion de polymère une couche sous-jacente de particules de polymère orientées formée au préalable afin de former sur cette couche sous-jacente un revêtement supplémentaire de ladite dispersion ;
ii) mettre au contact dudit revêtement supplémentaire un rouleau supplémentaire orientant les particules entraîné en rotation autour d'un axe longitudinal supplémentaire de celui-ci indépendamment dudit substrat afin d'avoir une vitesse tangentielle supplémentaire à la surface du substrat revêtu, ledit rouleau supplémentaire orientant les particules ayant un motif supplémentaire d'orientation des particules disposé avec un angle supplémentaire par rapport à la direction d'avance dudit substrat pour provoquer l'orientation des particules de polymère dudit revêtement supplémentaire selon une direction prédéterminée supplémentaire ; et
iii) faire sécher ledit revêtement supplémentaire pour provoquer l'évaporation dudit milieu liquide dispersant et la formation de ladite couche supplémentaire de particules de polymère orientées sur ladite couche sous-jacente ;
dans lequel au moins l'un desdits angles supplémentaires est différent dudit premier angle ou bien au moins l'une desdites vitesses tangentielles supplémentaires est différente de ladite première vitesse tangentielle, pour former ainsi sur ledit substrat un film de polymère multicouche orienté ayant au moins deux couches de particules de polymère orientées selon deux directions différentes l'une par rapport à l'autre.

2. Procédé selon la revendication 1, dans lequel l'axe longitudinal dudit premier rouleau orientant les particules s'étend à angle droit par rapport à la direction d'avance dudit substrat, et dans lequel ladite première direction prédéterminée est parallèle à la direction d'avance dudit substrat.

3. Procédé selon la revendication 1, dans lequel ledit premier rouleau orientant les particules comprend un premier élément cylindrique qui peut tourner autour dudit premier axe longitudinal et une première lèvre hélicoïdale continue sur ledit premier élément cylindrique sur au moins une partie de la longueur de celui-ci, ladite première lèvre hélicoïdale formant une première rainure hélicoïdale continue d'orientation des particules le long dudit premier élément cylindrique, et dans lequel ladite première lèvre et ladite première rainure définissent ledit premier motif d'orientation des particules.

4. Procédé selon la revendication 3, dans lequel ladite première lèvre hélicoïdale est définie par un seul fil métallique enroulé en hélice et étroitement autour de ladite partie dudit premier élément cylindrique.

5. Procédé selon la revendication 3, dans lequel ladite première rainure hélicoïdale d'orientation des particules est définie intégralement dans une surface périphérique dudit premier élément cylindrique.

6. Procédé selon la revendication 3, dans lequel seulement une couche supplémentaire de particules de polymère orientées est formée à l'étape (e), ladite première couche de particules de polymère orientées définissant ladite couche sous-jacente de particules de polymère orientées formée au préalable.

7. Procédé selon la revendication 6, dans lequel l'axe longitudinal dudit rouleau supplémentaire orientant les particules s'étend à angle droit par rapport à la direction d'avance dudit substrat, et dans lequel ladite direction prédéterminée supplémentaire forme un angle compris entre environ 5° et environ 85° par rapport à la direction d'avance dudit substrat.

8. Procédé selon la revendication 7, dans lequel ladite direction prédéterminée supplémentaire forme un angle d'environ 45° par rapport à la direction d'avance dudit substrat.

9. Procédé selon la revendication 6, dans lequel ledit rouleau supplémentaire orientant les particules comprend un élément cylindrique supplémentaire qui peut tourner autour dudit axe longitudinal supplémentaire et une pluralité de lèvres hélicoïdales continues supplémentaires juxtaposées sur ledit élément cylindrique supplémentaire sur au moins une partie de la longueur de celui-ci, lesdites lèvres hélicoïdales supplémentaires ayant un pas similaire et formant une série de rainures hélicoïdales supplémentaires d'orientation des particules le long dudit élément cylindrique supplémentaire, et dans lequel lesdites lèvres supplémentaires et lesdites rainures supplémentaires définissent ledit motif d'orientation des particules.

10. Procédé selon la revendication 9, dans lequel lesdites lèvres hélicoïdales supplémentaires sont définies par une pluralité de fils métalliques juxtaposés enroulés en hélice autour de ladite partie dudit élément cylindrique supplémentaire, lesdites rainures hélicoïdales supplémentaires d'orientation des particules étant chacune définies entre des fils adjacents.

11. Procédé selon la revendication 9, dans lequel lesdites lèvres hélicoïdales supplémentaires sont définies par une pluralité de nervures hélicoïdales formées intégralement sur une surface périphérique dudit élément cylindrique supplémentaire, lesdites rainures hélicoïdales supplémentaires d'orientation des particules étant chacune définies entre des nervures adjacentes.

12. Procédé selon la revendication 9, dans lequel lesdites rainures hélicoïdales supplémentaires d'orientation des particules sont définies intégralement dans une surface périphérique dudit élément cylindrique supplémentaire.

13. Procédé selon la revendication 6, dans lequel l'axe longitudinal dudit rouleau supplémentaire orientant les particules et la direction d'avance dudit substrat sont inclinés avec un angle d'inclinaison d'environ 5° à environ 85° l'un par rapport à l'autre, et dans lequel ladite direction prédéterminée supplémentaire est à angle droit par rapport à l'axe longitudinal dudit rouleau supplémentaire orientant les particules et forme un angle égal audit angle d'inclinaison par rapport à la direction d'avance dudit substrat.

14. Procédé selon la revendication 13, dans lequel ledit angle d'inclinaison est d'environ 45°.

15. Procédé selon la revendication 13, dans lequel l'axe longitudinal dudit rouleau supplémentaire orientant les particules est incliné avec ledit angle d'inclinaison par rapport à la direction d'avance dudit substrat.

16. Procédé selon la revendication 13, dans lequel l'axe longitudinal dudit rouleau supplémentaire orientant les particules est parallèle à l'axe longitudinal dudit premier rouleau orientant les particules, et dans lequel on fait varier la direction d'avance dudit substrat avant de mettre ledit rouleau supplémentaire orientant les particules en contact avec ledit revêtement supplémentaire afin d'obtenir une inclinaison audit angle d'inclinaison par rapport à l'axe longitudinal dudit rouleau supplémentaire orientant les particules.

17. Procédé selon la revendication 13, dans lequel ledit rouleau supplémentaire orientant les particules comprend un élément cylindrique supplémentaire qui peut tourner autour dudit axe longitudinal supplémentaire et une lèvre hélicoïdale continue supplémentaire sur ledit élément cylindrique supplémentaire sur au moins une partie de la longueur de celui-ci, ladite lèvre hélicoïdale supplémentaire formant une rainure hélicoïdale continue supplémentaire d'orientation des particules le long dudit élément cylindrique supplémentaire, et dans lequel ladite lèvre supplémentaire et ladite rainure supplémentaire définissent ledit motif supplémentaire d'orientation des particules.

18. Procédé selon la revendication 17, dans lequel ladite lèvre hélicoïdale supplémentaire est définie par un seul fil métallique enroulé en hélice et étroitement autour de ladite partie dudit élément cylindrique supplémentaire.

19. Procédé selon la revendication 17, dans lequel ladite rainure hélicoïdale supplémentaire d'orientation des particules est définie intégralement dans une surface périphérique dudit élément cylindrique supplémentaire.

20. Procédé selon la revendication 3, dans lequel deux couches supplémentaires de particules de polymère orientées sont formées à l'étape (e) au moyen des opérations consistant à :
i) revêtir ladite première couche de particules de polymère orientées avec ladite dispersion de polymère pour former sur ladite première couche un deuxième revêtement de ladite dispersion ;
ii) mettre au contact dudit deuxième revêtement un deuxième rouleau orientant les particules entraîné en rotation autour d'un deuxième axe longitudinal de celui-ci indépendamment dudit substrat afin d'avoir une deuxième vitesse tangentielle à la surface du substrat revêtu, ledit deuxième rouleau orientant les particules ayant un deuxième motif d'orientation des particules disposé avec un deuxième angle par rapport à la direction d'avance dudit substrat pour provoquer l'orientation des particules de polymère dudit deuxième revêtement selon une deuxième direction prédéterminée ;
iii) faire sécher ledit deuxième revêtement pour provoquer l'évaporation dudit milieu liquide dispersant et la formation d'une deuxième couche de particules de polymère orientées sur ladite première couche ;
iv) revêtir de ladite dispersion de polymère ladite deuxième couche de particules de polymère orientées afin de former sur ladite deuxième couche un troisième revêtement de ladite dispersion ;
v) mettre au contact dudit troisième revêtement un troisième rouleau orientant les particules entraîné en rotation autour d'un troisième axe longitudinal de celui-ci indépendamment dudit substrat afin d'avoir une troisième vitesse tangentielle à la surface du substrat revêtu, ledit troisième rouleau orientant les particules ayant un troisième motif d'orientation des particules disposé avec un troisième angle par rapport à la direction d'avance dudit substrat pour provoquer l'orientation des particules de polymère dudit troisième revêtement selon une troisième direction prédéterminée ; et
vi) faire sécher ledit troisième revêtement pour provoquer l'évaporation dudit milieu liquide dispersant et la formation d'une troisième couche de particules de polymère orientées sur ladite deuxième couche ;
dans lequel ledit deuxième angle est différent dudit premier angle ou bien ladite deuxième vitesse tangentielle est différente de ladite première vitesse tangentielle, grâce à quoi ladite deuxième direction prédéterminée est différente de ladite première direction prédéterminée, et dans lequel ledit troisième angle est différent dudit deuxième angle ou bien ladite troisième vitesse tangentielle est différente de ladite deuxième vitesse tangentielle, grâce à quoi ladite troisième direction prédéterminée est différente de ladite deuxième direction prédéterminée.

21. Procédé selon la revendication 20, dans lequel l'axe longitudinal dudit deuxième rouleau orientant les particules s'étend à angle droit par rapport à la direction d'avance dudit substrat, et dans lequel ladite deuxième direction prédéterminée forme un angle compris entre environ 5° et environ 85° par rapport à la direction d'avance dudit substrat.

22. Procédé selon la revendication 21, dans lequel ladite deuxième direction prédéterminée forme un angle d'environ 45° par rapport à la direction d'avance dudit substrat.

23. Procédé selon la revendication 21, dans lequel l'axe longitudinal dudit troisième rouleau orientant les particules s'étend à angle droit par rapport à la direction d'avance dudit substrat, et dans lequel ladite troisième direction prédéterminée forme un angle compris entre environ 5° et environ 85° par rapport à la direction d'avance dudit substrat.

24. Procédé selon la revendication 20, dans lequel ledit deuxième rouleau orientant les particules comprend un deuxième élément cylindrique qui peut tourner autour dudit deuxième axe longitudinal et une première pluralité de lèvres hélicoïdales continues juxtaposées sur ledit deuxième élément cylindrique sur au moins une partie de la longueur de celui-ci, les lèvres hélicoïdales de ladite première pluralité ayant un pas similaire et formant une première série de rainures hélicoïdales d'orientation des particules le long dudit deuxième élément cylindrique, les lèvres de ladite première pluralité et les rainures de ladite première série définissant ledit deuxième motif d'orientation des particules, et dans lequel ledit troisième rouleau orientant les particules comprend un troisième élément cylindrique qui peut tourner autour dudit troisième axe longitudinal et une deuxième pluralité de lèvres hélicoïdales continues juxtaposées sur ledit troisième élément cylindrique sur au moins une partie de la longueur de celui-ci, les lèvres hélicoïdales de ladite deuxième pluralité ayant un pas similaire et formant une deuxième série de rainures hélicoïdales d'orientation des particules le long dudit troisième élément cylindrique, les lèvres de ladite deuxième pluralité et les rainures de ladite deuxième série définissant ledit troisième motif d'orientation des particules.

25. Procédé selon la revendication 24, dans lequel les lèvres hélicoïdales de ladite première pluralité sont définies par une pluralité de fils métalliques juxtaposés enroulés en hélice autour de ladite partie dudit deuxième élément cylindrique, les rainures hélicoïdales d'orientation des particules de ladite première série étant chacune définies entre des fils adjacents.

26. Procédé selon la revendication 24, dans lequel les lèvres hélicoïdales de ladite première pluralité sont définies par une pluralité de nervures hélicoïdales formées intégralement sur une surface périphérique dudit deuxième élément cylindrique, les rainures hélicoïdales d'orientation des particules de ladite première série étant chacune définies entre des nervures adjacentes.

27. Procédé selon la revendication 24, dans lequel les rainures hélicoïdales d'orientation des particules de ladite première série sont définies intégralement dans une surface périphérique dudit deuxième élément cylindrique.

28. Procédé selon la revendication 24, dans lequel les lèvres hélicoïdales de ladite deuxième pluralité sont définies par une pluralité de fils métalliques juxtaposés enroulés en hélice autour de ladite partie dudit troisième élément cylindrique, les rainures hélicoïdales d'orientation des particules de ladite deuxième série étant chacune définies entre des fils adjacents.

29. Procédé selon la revendication 24, dans lequel les lèvres hélicoïdales de ladite deuxième pluralité sont définies par une pluralité de nervures hélicoïdales formées intégralement sur une surface périphérique dudit troisième élément cylindrique, les rainures hélicoïdales d'orientation des particules de ladite deuxième série étant chacune définies entre des nervures adjacentes.

30. Procédé selon la revendication 24, dans lequel les rainures hélicoïdales d'orientation des particules de ladite deuxième série sont définies intégralement dans une surface périphérique dudit troisième élément cylindrique.

31. Procédé selon la revendication 24, dans lequel ledit troisième motif d'orientation des particules est le même que ledit deuxième motif d'orientation des particules, et dans lequel ladite troisième vitesse tangentielle est différente de ladite deuxième vitesse tangentielle.

32. Procédé selon la revendication 21, dans lequel l'axe longitudinal dudit troisième rouleau orientant les particules s'étend à angle droit par rapport à la direction d'avance dudit substrat, et dans lequel ladite troisième direction prédéterminée est la même que ladite première direction prédéterminée.

33. Procédé selon la revendication 20, dans lequel ledit deuxième rouleau orientant les particules comprend un deuxième élément cylindrique qui peut tourner autour dudit deuxième axe longitudinal et une pluralité de lèvres hélicoïdales continues supplémentaires juxtaposées sur ledit deuxième élément cylindrique sur au moins une partie de la longueur de celui-ci, lesdites lèvres hélicoïdales supplémentaires ayant un pas similaire et formant une série de rainures hélicoïdales supplémentaires d'orientation des particules le long dudit deuxième élément cylindrique, lesdites lèvres supplémentaires et lesdites rainures supplémentaires définissant ledit deuxième motif d'orientation des particules, et dans lequel ledit troisième rouleau orientant les particules comprend un troisième élément cylindrique qui peut tourner autour dudit troisième axe longitudinal et une autre lèvre hélicoïdale continue sur ledit troisième élément cylindrique sur au moins une partie de la longueur de celui-ci, ladite autre lèvre hélicoïdale formant une autre rainure hélicoïdale continue d'orientation des particules le long dudit troisième élément cylindrique, et dans lequel ladite autre lèvre et ladite autre rainure définissent ledit troisième motif d'orientation des particules.

34. Procédé selon la revendication 33, dans lequel lesdites lèvres hélicoïdales supplémentaires sont définies par une pluralité de fils métalliques juxtaposés enroulés en hélice autour de ladite partie dudit deuxième élément cylindrique, lesdites rainures hélicoïdales supplémentaires d'orientation des particules étant chacune définies entre des fils adjacents.

35. Procédé selon la revendication 33, dans lequel lesdites lèvres hélicoïdales supplémentaires sont définies par une pluralité de nervures hélicoïdales formées intégralement sur une surface périphérique dudit deuxième élément cylindrique, lesdites rainures hélicoïdales supplémentaires d'orientation des particules étant chacune définies entre des nervures adjacentes.

36. Procédé selon la revendication 33, dans lequel lesdites rainures hélicoïdales supplémentaires d'orientation des particules sont définies intégralement dans une surface périphérique dudit deuxième élément cylindrique.

37. Procédé selon la revendication 33, dans lequel ladite autre lèvre hélicoïdale est définie par un seul fil métallique enroulé en hélice et étroitement autour de ladite partie dudit troisième élément cylindrique.

38. Procédé selon la revendication 33, dans lequel ladite autre rainure hélicoïdale d'orientation des particules est définie intégralement dans une surface périphérique dudit troisième élément cylindrique.

39. Procédé selon la revendication 33, dans lequel ledit troisième motif d'orientation des particules est le même que ledit premier motif d'orientation des particules, et dans lequel ladite troisième vitesse tangentielle est la même que ladite première vitesse tangentielle.

40. Procédé selon la revendication 20, dans lequel l'axe longitudinal dudit deuxième rouleau orientant les particules et la direction d'avance dudit substrat sont inclinés avec un angle d'inclinaison d'environ 5° à environ 85° l'un par rapport à l'autre, et
dans lequel ladite deuxième direction prédéterminée est à angle droit par rapport à l'axe longitudinal dudit deuxième rouleau orientant les particules et forme un angle égal audit angle d'inclinaison par rapport à la direction d'avance dudit substrat.

41. Procédé selon la revendication 40, dans lequel ledit angle d'inclinaison est d'environ 45°.

42. Procédé selon la revendication 40, dans lequel l'axe longitudinal dudit deuxième rouleau orientant les particules est incliné avec ledit angle d'inclinaison par rapport à la direction d'avance dudit substrat.

43. Procédé selon la revendication 40, dans lequel l'axe longitudinal dudit deuxième rouleau orientant les particules est parallèle à l'axe longitudinal dudit premier rouleau orientant les particules, et dans lequel on fait varier la direction d'avance dudit substrat avant de mettre ledit deuxième rouleau orientant les particules en contact avec ledit deuxième revêtement afin d'obtenir une inclinaison audit angle d'inclinaison par rapport à l'axe longitudinal dudit deuxième rouleau orientant les particules.

44. Procédé selon la revendication 40, dans lequel l'axe longitudinal dudit troisième rouleau orientant les particules s'étend à angle droit par rapport à la direction d'avance dudit substrat, et dans lequel ladite troisième direction prédéterminée est la même que ladite première direction prédéterminée.

45. Procédé selon la revendication 40, dans lequel ledit deuxième rouleau orientant les particules comprend un deuxième élément cylindrique qui peut tourner autour dudit deuxième axe longitudinal et une deuxième lèvre hélicoïdale continue sur ledit deuxième élément cylindrique sur au moins une partie de la longueur de celui-ci, ladite deuxième lèvre hélicoïdale formant une deuxième rainure hélicoïdale continue d'orientation des particules le long dudit deuxième élément cylindrique, ladite deuxième lèvre et ladite deuxième rainure définissant ledit deuxième motif d'orientation des particules, et dans lequel ledit troisième rouleau orientant les particules comprend un troisième élément cylindrique qui peut tourner autour dudit troisième axe longitudinal et une troisième lèvre hélicoïdale continue sur ledit troisième élément cylindrique sur au moins une partie de la longueur de celui-ci, ladite troisième lèvre hélicoïdale formant une troisième rainure hélicoïdale continue d'orientation des particules le long dudit troisième élément cylindrique, ladite troisième lèvre et ladite troisième rainure définissant ledit troisième motif d'orientation des particules.

46. Procédé selon la revendication 45, dans lequel ladite deuxième lèvre hélicoïdale est définie par un seul fil métallique enroulé en hélice et étroitement autour de ladite partie dudit deuxième élément cylindrique.

47. Procédé selon la revendication 45, dans lequel ladite deuxième rainure hélicoïdale d'orientation des particules est définie intégralement dans une surface périphérique dudit deuxième élément cylindrique.

48. Procédé selon la revendication 45, dans lequel ladite troisième lèvre hélicoïdale est définie par un seul fil métallique enroulé en hélice et étroitement autour de ladite partie dudit troisième élément cylindrique.

49. Procédé selon la revendication 45, dans lequel ladite troisième rainure hélicoïdale d'orientation des particules est définie intégralement dans une surface périphérique dudit troisième élément cylindrique.

50. Procédé selon la revendication 45, dans lequel lesdits deuxième et troisième motifs d'orientation des particules sont les mêmes que ledit premier motif d'orientation des particules, lesdites première et deuxième vitesses tangentielles sont les mêmes que ladite première vitesse tangentielle, et dans lequel ledit deuxième angle est différent dudit premier angle et ledit troisième angle est le même que ledit premier angle.

51. Procédé selon la revendication 1, dans lequel ledit substrat se présente sous la forme d'une bande continue.

52. Procédé selon la revendication 1, dans lequel lesdites particules de polymère sont des particules d'un polymère à l'eau.

53. Procédé selon la revendication 52, dans lequel ledit polymère à l'eau est choisi dans l'ensemble comprenant le poly(chlorure de vinylidène), le poly(acétate de vinyle), le poly(alcool vinylique) et les copolymères styrène/butadiène.

54. Procédé selon la revendication 52, dans lequel ledit milieu liquide dispersant comprend de l'eau, un alcool ou un mélange de ceux-ci.

55. Utilisation d'un rouleau orientant les particules pour orienter les particules de polymère présentes dans une dispersion de polymère appliquée sur un substrat, ledit rouleau orientant les particules comprenant un élément cylindrique qui peut tourner autour d'un axe longitudinal de celui-ci et une pluralité de lèvres hélicoïdales continues juxtaposées sur ledit élément cylindrique sur au moins une partie de la longueur de celui-ci, lesdites lèvres hélicoïdales ayant un pas similaire et formant une série de rainures hélicoïdales d'orientation des particules le long dudit élément cylindrique pour donner une orientation prédéterminée aux particules de polymère quand ledit élément cylindrique est mis en rotation tout en étant en contact avec la dispersion de polymère.

56. Utilisation d'un rouleau selon la revendication 55, dans laquelle lesdites lèvres hélicoïdales sont définies par une pluralité de fils métalliques juxtaposés enroulés en hélice autour de ladite partie dudit élément cylindrique, lesdites rainures hélicoïdales d'orientation des particules étant chacune définies entre des fils adjacents.

57. Utilisation d'un rouleau selon la revendication 55, dans laquelle lesdites lèvres hélicoïdales sont définies par une pluralité de nervures hélicoïdales formées intégralement sur une surface périphérique dudit élément cylindrique, lesdites rainures hélicoïdales d'orientation des particules étant chacune définies entre des nervures adjacentes.

58. Utilisation d'un rouleau selon la revendication 55, dans laquelle lesdites rainures hélicoïdales d'orientation des particules sont définies intégralement dans une surface périphérique dudit élément cylindrique.

59. Utilisation d'un rouleau selon la revendication 55, dans laquelle le pas desdites lèvres hélicoïdales est uniforme le long de ladite partie dudit élément cylindrique.

60. Substrat revêtu d'un film de polymère multicouche orienté, dans lequel ledit film comprend au moins deux couches de particules de polymère orientées selon deux directions différentes l'une par rapport à l'autre.

61. Substrat revêtu selon la revendication 60, dans lequel ledit film comporte une première couche comprenant des particules de polymère orientées selon une première direction, une deuxième couche placée sur ladite première couche et comprenant des particules de polymère orientées selon une deuxième direction formant un angle d'environ 45° par rapport à ladite première direction, et une troisième couche placée sur ladite deuxième couche et comprenant des particules de polymère orientées selon une troisième direction parallèle à ladite première direction.

62. Substrat revêtu selon la revendication 60, dans lequel lesdites particules de polymère sont des particules d'un polymère à l'eau.

63. Substrat revêtu selon la revendication 62, dans lequel ledit polymère à l'eau est choisi dans l'ensemble comprenant le poly(chlorure de vinylidène), le poly(acétate de vinyle), le poly(alcool vinylique) et les copolymères styrène/butadiène.
